# EUROPÄISCHE PATENTSCHRIFT

(11) **EP 3 751 155 B1**
(45) Veröffentlichungstag und Bekanntmachung des Hinweises auf die Patenterteilung: **23.08.2023**
(21) Anmeldenummer: 19179344.7
(22) Anmeldetag: 11.06.2019
(51) Int. Cl.: F16B 7/18, F16B 7/22, F16B 7/04

(54) **VERBINDUNGSVORRICHTUNG ZUR MECHANISCHEN VERBINDUNG VON RAHMENPROFILEN**
CONNECTING DEVICE FOR THE MECHANICAL CONNECTION OF FRAME SECTIONS
DISPOSITIF DE RACCORDEMENT DESTINÉ AU RACCORDEMENT MÉCANIQUE DES PROFILÉS DE CADRE

(43) Veröffentlichungstag der Anmeldung: 16.12.2020
(73) Patentinhaber: Klaus Ostermeier GmbH, 85301 Schweitenkirchen (DE)
(72) Erfinder: Ostermeier, Peter, 85301 Schweitenkirchen (DE)
(74) Vertreter: Isarpatent

(56) Entgegenhaltungen:
- WO-A1-90/09530
- FR-A1- 2 440 486

## Beschreibung

Die Erfindung betrifft eine Verbindungsvorrichtung zur mechanischen Verbindung von Rahmenprofilen, insbesondere von Hohl-Rahmenprofilen. Die Verbindungsvorrichtung kann als Profilrahmenverbindung für Maschinenzellen oder sonstige Rahmengestelle eingesetzt werden.

Rahmenprofile können zum modularen Aufbau eines Gehäuserahmens eingesetzt werden. Gehäuserahmen können zum Tragen von Baueinheiten verwendet werden.

Die FR 2440486 A1 beschreibt eine Vorrichtung zum Befestigen einer Schutzplanke an einem Pfosten einer Schutzeinrichtung. Dabei liegt ein abgewickeltes Element an dem Pfosten an, wobei ein Kipppunkt des abgewickelten Elementes durch eine Konkavität der Kontur des abgewickelten Elementes gebildet wird.

Die EP 0389910 B1 beschreibt ein modulares Gehäusesystem für elektronische Baueinheiten. Dieses herkömmliche modulare Gehäusesystem weist Holme auf, die nach einem Baukastenprinzip mit Eckknoten und Verbindungselementen zusammensetzbar sind. Dieses modulare Gehäusesystem umfasst Längsholme sowie Querholme, die aus Strangpressprofilen bestehen und die Führungsrillen haben, die einen schlüssellochförmigen Querschnitt aufweisen können. Ein Nachteil eines derartigen Gehäusesystems besteht darin, dass Leitungen von eingebauten elektronischen Geräten nicht ohne Weiteres innerhalb des Gehäuserahmens verlegt werden können und somit freiliegend sind. Demzufolge sind verlegte Leitungen bei diesem herkömmlichen Gehäusesystem nicht geschützt und können beschädigt werden. Ein weiterer Nachteil des herkömmlichen Gehäusesystems besteht darin, dass die Rahmenprofile nur mit einem erheblichen technischen Aufwand herstellbar sind.

Es ist daher eine Aufgabe der vorliegenden Erfindung, eine Verbindungsvorrichtung zur mechanischen Verbindung von Rahmenprofilen zu schaffen, die mit geringem technischen Aufwand eine hohe mechanische Verbindungskraft zwischen Rahmenprofilen bereitstellt und in einfacher Weise montierbar ist.

Diese Aufgabe wird erfindungsgemäß durch eine Verbindungsvorrichtung zur mechanischen Verbindung von Rahmenprofilen mit den in Patentanspruch 1 angegebenen Merkmalen gelöst.

Die Erfindung schafft demnach eine Verbindungsvorrichtung zur mechanischen Verbindung von Rahmenprofilen, wobei ein erstes Rahmenprofil mindestens eine vorstehende Einstecklasche aufweist, die durch einen in einer Profilwand eines zweiten Rahmenprofils vorgesehenen entsprechend geformten Ausbruchschlitz hindurchsteckbar ist,
wobei die vorstehende Einstecklasche des ersten Rahmenprofils eine Einführöffnung zum Einführen eines ersten Hebelabschnittes eines Kippsteines besitzt, der einen zweiten Hebelabschnitt mit einer nach außen gewölbten Kontur aufweist, die an einem Kipppunkt an der Profilwand des zweiten Rahmenprofils anliegt,
wobei der zweite Hebelabschnitt des Kippsteins mittels mindestens eines Verbindungsbauelementes um den Kipppunkt herum hin zu der Profilwand des zweiten Rahmenprofils ziehbar ist, wobei der in die Einführöffnung der vorstehenden Einstecklasche eingeführte erste Hebelabschnitt des Kippsteins auf die durch den Ausbruchschlitz des zweiten Rahmenprofils hindurchgesteckte Einstecklasche des ersten Rahmenprofils eine Zugkraft ausübt, sodass das erste Rahmenprofil mit einer entsprechenden Anpresskraft gegen die Profilwand des zweiten Rahmenprofils gepresst wird.

Die erfindungsgemäße Verbindungsvorrichtung zur mechanischen Verbindung von Rahmenprofilen bietet den Vorteil, dass die mechanische Verbindung zwischen den beiden Rahmenprofilen wieder lösbar ist.

Ein weiterer Vorteil der erfindungsgemäßen Verbindungsvorrichtung zur mechanischen Verbindung von Rahmenprofilen besteht darin, dass durch die Hebelwirkung der beiden Hebelabschnitte die beiden Rahmenprofile zur Montage mit einer hohen Anpresskraft stabil miteinander verbunden sind.

Ein weiterer Vorteil der erfindungsgemäßen Verbindungsvorrichtung zur mechanischen Verbindung von Rahmenprofilen besteht darin, dass die Verbindungsvorrichtung mit einem geringen technischen Aufwand herstellbar ist.

Ein weiterer Vorteil der erfindungsgemäßen Verbindungsvorrichtung besteht darin, dass sie zur mechanischen Verbindung von Standard-Rahmenprofilen, insbesondere Rahmen-Hohlprofilen und/oder Rahmen-T-Profilen und/oder Plattenelementen, geeignet ist.

Ein weiterer Vorteil der erfindungsgemäßen Verbindungsvorrichtung zur mechanischen Verbindung von Rahmenprofilen, insbesondere Rahmen-Hohlprofilen, besteht darin, dass sie die Verlegung von verschiedenartigen Leitungen innerhalb der Rahmen-Hohlprofile und eines daraus aufgebauten Gehäuses erlaubt.

Bei einer möglichen Ausführungsform der erfindungsgemäßen Verbindungsvorrichtung weist der erste Hebelabschnitt des Kippsteins eine sich verjüngende Außenkontur zum Einführen in die Einführöffnung der vorstehenden Einstecklasche auf.

Dies bietet den besonderen Vorteil, dass die Montage erleichtert wird.

Bei einer weiteren möglichen Ausführungsform der erfindungsgemäßen Verbindungsvorrichtung weist der zweite Hebelabschnitt des Kippsteins mindestens eine Gewindeöffnung zum Hineinschrauben des Verbindungsbauelementes, insbesondere einer Schraube, auf.

Ein solches Verbindungsbauelement bietet eine lösbare Montageverbindung.

Bei einer weiteren möglichen Ausführungsform der erfindungsgemäßen Verbindungsvorrichtung weist der zweite Hebelabschnitt der Kippsteins eine Öffnung zum Anbringen einer Nietverbindung auf.

Bei einer weiteren möglichen Ausführungsform der erfindungsgemäßen Verbindungsvorrichtung sind die Rahmenprofile entlang einer Längsachse jeweils symmetrisch, insbesondere rotationssymmetrisch, ausgebildet. Es ist auch möglich, dass die Rahmenprofile vor der Montage umgeformt werden, beispielsweise gebogen.

Bei einer weiteren möglichen Ausführungsform der erfindungsgemäßen Verbindungsvorrichtung weisen die Rahmenprofile Rahmen-Hohlprofile auf, die einen runden, rechteckigen, quadratischen, ovalen oder dreieckigen Querschnitt, und/oder offene Rahmenprofile aufweisen.

Der Querschnitt der Rahmen-Hohlprofile kann an die Anzahl und Größe sowie Form der darin verlegbaren Leitungen angepasst werden.

Weiterhin ermöglicht die erfindungsgemäße Verbindungsvorrichtung, dass Rahmenprofile mit unterschiedlichen Querschnitten miteinander verbunden werden können, beispielsweise eine Rahmen-Hohlprofil mit einem offenen Rahmenprofil.

Bei einer weiteren möglichen Ausführungsform der erfindungsgemäßen Verbindungsvorrichtung bestehen die Rahmenprofile aus Metall.

Bei einer alternativen Ausführungsform der erfindungsgemäßen Verbindungsvorrichtung bestehen die Rahmenprofile aus Kunststoff .

Die Rahmenprofile können auch aus anderen Materialien hergestellt werden, insbesondere aus Holz, Stein, Beton oder einem Verbundwerkstoff.

Die erfindungsgemäße Verbindungsvorrichtung ist dementsprechend vielseitig einsetzbar.

Bei einer weiteren möglichen Ausführungsform der erfindungsgemäßen Verbindungsvorrichtung ist eine Stirnseite des ersten Rahmenprofils in Bezug auf die Längsachse des ersten Rahmenprofils mit einem vorgegebenen Montagewinkel geschnitten ausgebildet und liegt gegen die Profilwand des zweiten Rahmenprofils mit dem Montagewinkel an.

Der Montagewinkel liegt in einem Bereich zwischen 0° und 180°.

Die erfindungsgemäße Verbindungsvorrichtung lässt somit den Aufbau einer Vielzahl unterschiedlicher Rahmengestelle entsprechend dem Anwendungsfall zu.

Bei einer weiteren möglichen Ausführungsform der erfindungsgemäßen Verbindungsvorrichtung weist das zweite Rahmenprofil mindestens ein Montagefenster zur Handhabung des Kippsteins auf.

Hierdurch wird die Montage eines Rahmengestells mithilfe der erfindungsgemäßen Verbindungsvorrichtung weiter vereinfacht.

Bei einer weiteren möglichen Ausführungsform der erfindungsgemäßen Verbindungsvorrichtung weist das zweite Rahmenprofil diametral gegenüber dem in seiner Profilwand für die Einstecklasche des ersten Rahmenprofils vorgesehenen Ausbruchschlitz einen weiteren Ausbruchschlitz zum Hindurchstecken einer lang ausgebildeten Einstecklasche des ersten Rahmenprofils durch beide in der Profilwandung des zweiten Rahmen-Hohlprofils gegenüberliegende Ausbruchschlitze auf.

Hierdurch ist es möglich, die Stabilität eines mithilfe der erfindungsgemäßen Verbindungsvorrichtung aufgebauten Rahmengestells weiter zu erhöhen.

Bei einer weiteren möglichen Ausführungsform der erfindungsgemäßen Verbindungsvorrichtung sind die zum Hindurchstecken der Einstecklasche in der Profilwand des zweiten Rahmenprofils vorgesehenen Ausbruchschlitze und/oder der zentrale Ausbruch in der Profilwand des zweiten Rahmenprofils und/oder das Montagefenster in der Profilwand des zweiten Rahmenprofils durch einen Laserstrahl oder durch einen Wasserstrahl in die Profilwand des zweiten Rahmenprofils geschnitten.

Alternativ können auch andere Herstellungsverfahren eingesetzt werden, beispielsweise Drahterodieren oder Zerspannungsverfahren, wie z.B. Fräsen oder spanlose Trennverfahren, wie z. B. Lochen, Ausklinken oder Stanzen.

Der technische Aufwand zur Herstellung der Rahmenprofile und der daraus aufgebauten Rahmengestelle wird somit in Vergleich zum herkömmlichen Systemen vermindert.

Ein weiterer Vorteil besteht darin, dass vor allem die mithilfe des Laserstrahls und/oder des Wasserstrahls geschnittenen Bauteile mit einer hohen Präzision gefertigt und miteinander verbunden werden können.

Bei einer weiteren möglichen Ausführungsform der erfindungsgemäßen Verbindungsvorrichtung weisen die durch die Verbindungsvorrichtung verbundenen Rahmen-Hohlprofile jeweils einen Querschnitt auf, welcher zur Verlegung von Leitungen, insbesondere von elektrischen Leitungen und/oder hydraulischen Leitungen und/oder pneumatischen Leitungen, innerhalb der Rahmen-Hohlprofile geeignet ist.

Auch mechanische Zugseile (Bowdenzug) können innerhalb des Rahmen-Hohlprofils verlegt werden.

Hierdurch kann das mithilfe der erfindungsgemäßen Verbindungsvorrichtung aufgebaute Rahmengestell für eine Vielzahl von Anwendungsfällen gezielt angepasst werden.

Die Erfindung schafft ferner gemäß einem weiteren Aspekt eine Maschinenzelle mit einem Rahmen, der Rahmenprofile aufweist, die jeweils durch Verbindungsvorrichtungen gemäß dem ersten Aspekt der vorliegenden Erfindung mechanisch miteinander verbunden sind.

Die Erfindung schafft demnach eine Maschinenzelle mit einem Rahmen, der Rahmenprofile aufweist, die jeweils durch Verbindungsvorrichtungen miteinander mechanisch verbunden sind, wobei ein erstes Rahmenprofil mindestens eine vorstehende Einstecklasche aufweist, die durch einen in einer Profilwand eines zweiten Rahmenprofils vorgesehenen entsprechend geformten Ausbruchschlitz hindurchsteckbar ist, wobei die vorstehende Einstecklasche des ersten Rahmenprofils eine Einführöffnung zum Einführen eines ersten Hebelabschnittes eines Kippsteins besitzt, der einen zweiten Hebelabschnitt mit einer nach außen gewölbten Kontur aufweist, die an einem Kipppunkt an der Profilwand des zweiten Rahmenprofils anliegt, wobei der zweite Hebelabschnitt des Kippsteins mittels mindestens eines Verbindungsbauelementes um den Kipppunkt bzw. Drehpunkt herum hin zu der Profilwand des zweiten Rahmenprofils ziehbar ist, wobei der in die Einführöffnung der vorstehenden Einstecklasche eingeführte erste Hebelabschnitt des Kippsteins auf die durch den Ausbruchschlitz des zweiten Rahmenprofils hindurchgesteckte Einstecklasche des ersten Rahmenprofils eine Zugkraft ausübt, sodass das erste Rahmenprofil stirnseitig mit einer entsprechenden Anpresskraft gegen die Profilwand des zweiten Rahmenprofils gepresst wird.

Der Kippstein für eine Verbindungsvorrichtung gemäß dem ersten Aspekt der Erfindung weist einen ersten Hebelabschnitt zum Einführen in die Einführöffnung der vorstehenden Einstecklasche des ersten Rahmenprofils und einen zweiten Hebelabschnitt mit einer nach außen gewölbten Kontur auf, die einen Kipppunkt besitzt, der an der Profilwand des zweiten Rahmenprofils anliegt.

Ein Bauelement bzw. Trageelement kann mittels mindestens einer Verbindungsvorrichtung gemäß der Erfindung mit einem oder mehreren anderen Bauelementen, insbesondere Rahmenprofilen, mechanisch verbunden werden.

Bei dem Bauelement handelt es sich vorzugsweise um ein Rahmen-Hohlprofil, insbesondere um ein Rahmen-Hohlprofil mit einem runden, rechteckigen, quadratischen, ovalen oder dreieckigen Querschnitt, das zur Verlegung von Leitungen, insbesondere elektrischen und/oder hydraulischen Leitungen und/oder pneumatischen Leitungen, und/oder Bowdenzügen geeignet ist.

Das Bauelement kann auch eine Platte mit Einstecklaschen und/oder Ausbruchschlitzen umfassen.

Im Weiteren werden mögliche Ausführungsformen der unterschiedlichen erfindungsgemäßen Aspekte unter Bezugnahme auf die beigefügten Figuren näher erläutert.

Es zeigen:
- Figuren 1A, 1B: perspektivische Ansichten zur Erläuterung der Funktionsweise einer erfindungsgemäßen Verbindungsvorrichtung zur mechanischen Verbindung von Rahmenprofilen;
- Figuren 2A bis 2C: eine erste mögliche Ausführungsform eines bei der erfindungsgemäßen Verbindungsvorrichtung verwendeten Kippsteins;
- Figuren 3A bis 3C: eine weitere Ausführungsform eines bei der erfindungsgemäßen Verbindungsvorrichtung verwendbaren Kippsteins;
- Figuren 4A bis 4C: eine weitere Ausführungsvariante eines bei der erfindungsgemäßen Verbindungsvorrichtung verwendbaren Kippsteins;
- Figuren 5A bis 5C: eine weitere Ausführungsvariante eines bei der erfindungsgemäßen Verbindungsvorrichtung verwendbaren Kippsteins;
- Figuren 6A, 6B: eine mögliche beispielhafte Ausführungsform einer erfindungsgemäßen mechanischen Verbindungsvorrichtung zur Verbindung von Rahmenprofilen;
- Figuren 7A, 7B: eine weitere beispielhafte Ausführungsform einer mechanischen Verbindungsvorrichtung zur Verbindung von Rahmenprofilen;
- Figuren 8A, 8B: eine weitere beispielhafte Ausführungsform einer mechanischen Verbindungsvorrichtung zur Verbindung von Rahmenprofilen;
- Figuren 9A, 9B: eine weitere beispielhafte Ausführungsform einer mechanischen Verbindungsvorrichtung zur Verbindung von Rahmenprofilen;
- Figuren 10A, 10B: eine weitere beispielhafte Ausführungsform einer mechanischen Verbindungsvorrichtung zur Verbindung von Rahmenprofilen;
- Figuren 11A, 11B: eine weitere beispielhafte Ausführungsform einer mechanischen Verbindungsvorrichtung zur Verbindung von Rahmenprofilen;
- Figuren 12A, 12B: eine weitere beispielhafte Ausführungsform einer mechanischen Verbindungsvorrichtung zur Verbindung von Rahmenprofilen;
- Figuren 13A, 13B: eine weitere beispielhafte Ausführungsform einer mechanischen Verbindungsvorrichtung zur Verbindung von Rahmenprofilen;
- Figuren 14A, 14B: eine weitere beispielhafte Ausführungsform einer Verbindung zwischen einem Rahmenprofil und einem weiteren Normteil;
- Figuren 15A bis 15F: Konstruktionszeichnungen zur Darstellung eines mithilfe der erfindungsgemäßen Verbindungsvorrichtung aufgebauten Rahmengestells;
- Fig. 16: eine perspektivische Ansicht des in den Figuren 15A bis 15F dargestellten Rahmengestells;
- Fig. 17: eine Detailansicht des in Fig. 15 dargestellten Rahmengestells;
- Fig. 18: eine weitere Detailansicht des in Fig. 15 dargestellten Rahmengestells;
- Figuren 19A bis 19E: Ansichten einer mithilfe der erfindungsgemäßen Verbindungsvorrichtung aufgebauten Maschinenzelle als Anwendungsbeispiel;
- Fig. 20: eine perspektivische Ansicht der in Fig. 19A bis 19E dargestellten Maschinenzelle.

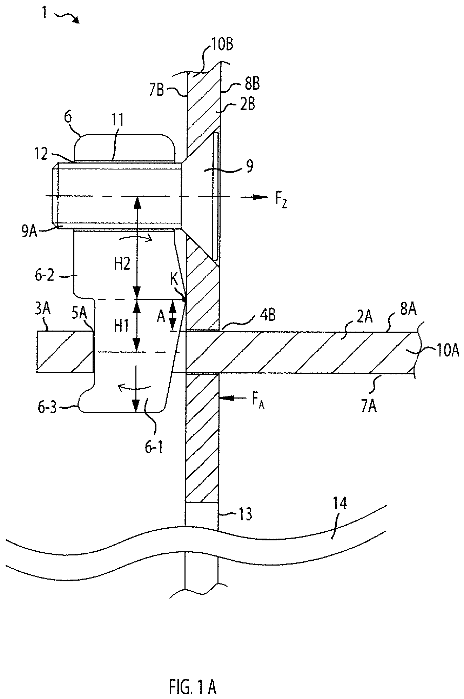

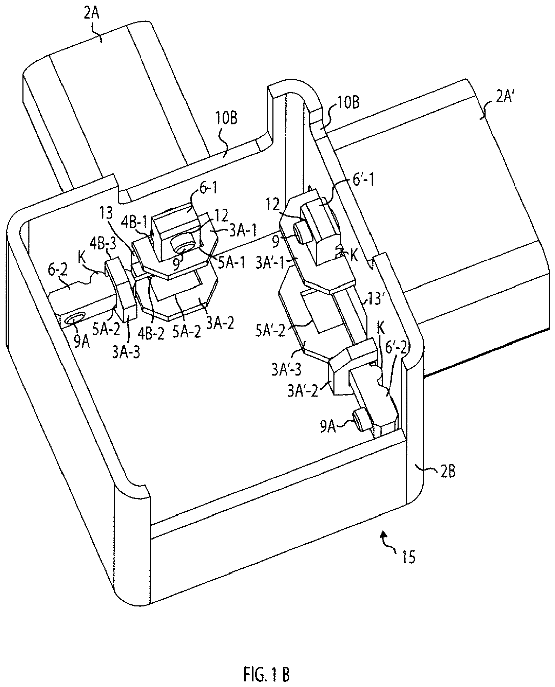

Die Figuren 1A, 1B dienen zur Erläuterung der Funktionsweise einer erfindungsgemäßen Verbindungsvorrichtung 1 zur mechanischen Verbindung von Rahmenprofilen 2. Die Verbindungsvorrichtung 1 ist zur mechanischen Verbindung von zwei Rahmenprofilen 2A, 2B vorgesehen. Wie in Fig. 1A schematisch dargestellt, wird ein erstes Rahmenprofil 2A mithilfe der erfindungsgemäßen Verbindungsvorrichtung 1 mechanisch mit einem zweiten Rahmenprofil 2B verbunden. Die beiden Rahmenprofile 2A, 2B können dabei entlang einer Längsachse symmetrisch ausgebildet sein. Bei einer möglichen Ausführungsform sind die Rahmenprofile 2 jeweils entlang einer Längsachse rotationssymmetrisch ausgebildet. Die Rahmenprofile 2A, 2B können zur Montage auch vorher umgeformt, beispielsweise gebogen werden. Bei einer möglichen Ausführungsform sind beide Rahmenprofile 2A, 2B Rahmen-Hohlprofile, die einen runden, rechteckigen, quadratischen, ovalen oder dreieckigen Querschnitt besitzen. Diese Rahmen-Hohlprofile eignen sich zur Verlegung von Leitungen 14 innerhalb eines durch die Rahmen-Hohlprofile aufgebauten Rahmengestells 16. Die beiden in Fig. 1A dargestellten Rahmenprofile 2A, 2B können bei einer möglichen Ausführungsform aus Metall bestehen. Bei einer weiteren möglichen Ausführungsform bestehen die beiden Rahmenprofile 2 zumindest teilweise aus Kunststoff.

Das erste Rahmenprofil 2A weist mindestens eine vorstehende Einstecklasche 3A auf, die durch einen in einer Profilwand 10B eines zweiten Rahmenprofils 2B vorgesehenen entsprechend geformten Ausbruchschlitz 4B hindurchsteckbar ist. Die vorstehende Einstecklasche 3A des ersten Rahmenprofils 2A besitzt eine Einführöffnung 5A zum Einführen eines ersten Hebelabschnittes eines Kippsteines 6. Die Einstecklaschen 3A sind vorzugsweise an der Stirnseite des Rahmenprofils 2A vorgesehen - wie auch in Fig. 1A dargestellt. Es ist auch möglich, dass vorstehende Einstecklaschen nach außen abstehend an der Profilwand 10A des Rohrprofils 2A vorgesehen sind. Einstecklaschen 3A an der Stirnseite des Rahmenprofils 2A lassen sich besonders günstig fertigen, beispielsweise durch Ausschneiden aus dem Rohrkörper. Der Kippstein 6 hat neben dem ersten Hebelabschnitt 6-1 mit einem Hebel H1 einen zweiten Hebelabschnitt 6-2 mit einem Hebel H2, wie in Fig. 1A schematisch dargestellt. Der Kippstein 6 weist eine nach außen gewölbte Kontur auf, die an einem Kipppunkt K (Drehpunkt) tangential an der inneren Oberfläche 7B der Profilwand 10B des zweiten Rahmenprofils 2B anliegt. Das zweite Rahmenprofil 2B weist eine nach außen gerichtete Oberfläche 8B auf. In gleicher Weise besitzt das erste Rahmenprofil 2A eine Profilwand 10A mit einer inneren Profilwandoberfläche 7A und einer äußeren Profilwandfläche 8A. Bei einer möglichen Ausführungsform ist die nach vorne vorstehende Einstecklasche 3A aus der Profilwand 10A des ersten Rahmenprofils 2A ausgeschnitten, insbesondere mithilfe eines Laserstrahls. Wie man in Fig. 1 erkennen kann, ist der zweite Hebelabschnitt 6-2 des Kippsteins 6 mittels mindestens eines Verbindungsbauelementes 9 um den Kipppunkt K herum hin zu der Profilwand 10B des zweiten Rahmenprofils 2B ziehbar. Bei dem in Fig. 1A dargestellten Ausführungsbeispiel ist das Verbindungsbauelement 9 eine Schraube mit einem Außengewinde 9A, die in ein Innengewinde 11 einer Öffnung 12 innerhalb des zweiten Hebelabschnittes 6-2 des Kippsteins 6 hineingeschraubt wird und den zweiten Hebelabschnitt 6-2 des Kippsteins 6 hin zu der inneren Oberfläche 7B der Profilwand 10B des zweiten Rahmenprofils 2B mit einer Zugkraft Fz hinzieht. Durch die Hebelwirkung der beiden Hebel H1, H2 wird das erste Rahmenprofil 2A bei der in Fig. 1A dargestellten Ausführungsform stirnseitig mit einer entsprechenden Anpresskraft F_{A} in die äußere Oberfläche 8B der Profilwand 10B des zweiten Rahmenprofils 2B mechanisch gepresst.

Bei dem in Fig. 1A dargestellten Ausführungsbeispiel ist das Verbindungsbauelement 9 eine Schraube, die in ein Gewinde 12 des Kippsteins 6 hineingeschraubt wird, um eine Zugkraft F_{z} auf den Kippstein 6 auszuüben. Bei einer alternativen Ausführungsform kann das Verbindungsbauelement 9 auch eine Nietverbindung aufweisen.

Bei der in Fig. 1A dargestellten Ausführungsform besitzt der Kippstein 6 lediglich eine Öffnung 12 mit einem Innengewinde 11 zur Aufnahme einer Verbindungsschraube 9. Bei alternativen Ausführungsformen kann der zweite Hebelabschnitt 6-2 des Kippsteins 6 mehrere Öffnungen 12 mit Innengewinde 11 aufweisen, um mehrere Verbindungsbauelemente 9 in den zweiten Hebelabschnitt 6-2 des Kippsteins 6 hineinzuschrauben. Hierdurch kann die Zugkraft Fz und die entsprechende Anpresskraft F_{A} je nach Anwendungsfall entsprechend der geforderten mechanischen Belastung angepasst werden. Der Durchmesser der Öffnung 12 für das Gewinde 11 kann ebenfalls an den jeweiligen Anwendungsfall angepasst werden. Beispielsweise kann ein M8-Gewinde zur Aufnahme einer entsprechenden Verbindungsschraube 9 verwendet werden.

Weiterhin kann die Geometrie, insbesondere die Außenkontur, des Kippsteins 6 für den jeweiligen Anwendungsfall ausgelegt werden. Die Außenkontur des Körpers des Kippsteins 6 weist an mindestens einer Stelle eine Außenwölbung auf, die an dem Kipppunkt K bzw. Drehpunkt an der Innenfläche 7B der Profilwandung 10B des zweiten Rahmenprofils 2B anliegt, um eine Hebelwirkung herbeizuführen. Die äußere Oberfläche des Körpers des Kippsteins 6 wölbt sich vorzugsweise in einem Bereich kontinuierlich nach außen und liegt an dem Kipppunkt K tangential an der Oberfläche der Profilwand 10B des Rahmenprofils 2B an. Die Länge und das Verhältnis der beiden Hebelarme H1, H2 können je nach Anwendungsfall variiert werden. Der erste Hebelabschnitt 6-1 des Kippsteins 6 beinhaltet den ersten Hebelarm H1 und der zweite Hebelabschnitt 6-2 beinhaltet den zweiten Hebelarm H2. Bei dem in Fig. 1A schematisch dargestellten Kippstein 6 weist dieser auf Seite des ersten Hebelabschnittes 6-1 eine Nase 6-3 zum Hintergreifen der vorstehenden Einstecklasche 3A auf. Weiterhin kann der erste Hebelabschnitt 6-1 des Kippsteins 6 bei einer möglichen Ausführungsform auch eine sich verjüngende Außenkontur zum erleichterten Einführen in die Einführöffnung 5A der Einstecklasche 3A besitzen. Hierdurch kann das Einführen des Kippsteins 6 in die Einführöffnung 5A für den Monteur erleichtert werden. Der Abstand A zwischen dem Kipppunkt K und dem Ausbruchschlitz 4B der Profilwandung 10B des zweiten Rahmenprofils 2B kann ebenfalls je nach Anwendungsfall und geforderter Anpresskraft F_{A} variieren.

Fig. 1B zeigt perspektivisch die Verbindung zwischen zwei horizontal ausgerichteten ersten Rahmenprofilen 2A, 2A' und einem vertikal ausgerichteten Eckrahmenprofil 2B eines Rahmengestells. Sowohl die beiden horizontal eingesetzten Rahmenprofile 2A, 2A' als auch das vertikal ausgerichtete Eckrahmenprofil sind bei dem dargestellten Ausführungsbeispiel Rahmen-Hohlprofile mit einem rechteckigen Querschnitt. Wie man in Fig. 1B erkennen kann, besitzen bei dem dargestellten Ausführungsbeispiel die beiden horizontal ausgerichteten Quer-Rahmenprofile 2A, 2A' jeweils drei an ihrer Stirnseite nach vorne abstehende Einstecklaschen 3A-1, 3A-2, 3A-3 bzw. 3A'-1, 3A'-2, 3A'-3. Diese werden in entsprechend geformte Ausbruchschlitze 4B des zweiten vertikal ausgerichteten Rahmenhohlprofils 2B hindurchgesteckt, wie in Fig. 1B erkennbar. Die erste Einstecklasche 3A-1 des Rahmenprofils 2A wird durch den Ausbruchschlitz 4B-1 des zweiten Rahmenprofils 2B hindurchgesteckt und anschließend mithilfe des Kippsteins 6 weiter in den Hohlraum des Rahmen-Hohlprofils 2B durch den ersten Hebelabschnitt 6-1 des Kippsteins 6 gezogen, sodass die an der Außenfläche 8B der Profilwand 10B des zweiten Rahmenprofils 2B anliegende Stirnseite des ersten Rahmenprofils 2A mit einer Anpresskraft F_{A} gegen die Profilwand 10B gepresst wird. Wie in Fig. 1B erkennbar, wird eine weitere nach vorne stehende dritte Einstecklasche 3A-3 des Quer-Rahmenprofils 2A durch einen entsprechenden Ausbruchschlitz 4B-3 des senkrecht ausgerichteten aufnehmenden zweiten Rahmenprofils 2B hindurchgesteckt und mithilfe eines Kippsteins 6 aufgrund der Hebelwirkung in das Innere des Rahmenprofils 2B gezogen, sodass die Stirnseite des horizontal ausgerichteten Rahmenprofils 2A in die Außenfläche 8B der Profilwand 10B des zweiten Rahmenprofils 2B mit einer vorgegebenen Anpresskraft F_{A} gepresst wird. In Fig. 1B ist zudem die zweite vorstehende Einstecklasche 3A-2 des Rahmenprofils 2A erkennbar, die eine Einführöffnung 5A-2 zur Aufnahme eines weiteren (nicht gezeigten) Kippsteins 6 besitzt. Die zweite Einstecklasche 3A-2 des zweiten Rahmenprofils 2B wird ebenfalls durch einen entsprechenden Ausbruchschlitz 4B-2 des aufnehmenden senkrecht ausgerichteten Rahmenprofils 2B hindurchgesteckt. Wie man in Fig. 1B ferner erkennen kann, sind die verschiedenen Ausbruchschlitze 4B-1, 4B-2 und 4B-3 um einen zentralen Ausbruch 13 herum angeordnet. Der zentrale Ausbruch 13 in der Profilwand 10B zweiten des Rahmenprofils 2B ist bei einer möglichen Ausführungsform mithilfe eines Laserstrahls in die Profilwand 10B des zweiten Rahmenprofils 2B hineingeschnitten. Der zentrale Ausbruch 13 in der Profilwand 10B des zweiten Rahmenprofils 2B weist vorzugsweise eine Kontur auf, die dem Querschnitt des eingesteckten ersten Rahmen-Hohlprofils 2A entspricht. In gleicher Weise weist der zweite in Fig. 1B dargestellte zentrale Ausbruch 13' eine Kontur auf, die dem Querschnitt des anderen eingesteckten ersten Rahmen-Hohlprofils 2A' entspricht. Bei der in Fig. 1B dargestellten Ausführungsform weisen beide horizontal ausgerichtete Quer-Rahmen-Hohlprofile 2A, 2A' einen im Wesentlichen quadratischen Querschnitt auf und die beiden zentralen Ausbrüche 13, 13' besitzen einen entsprechenden quadratischen Querschnitt. Hierdurch können Kabel 14 in einfacher Weise innerhalb der Rahmen-Hohlprofile 2 verlegt werden, wie in Fig. 1A schematisch dargestellt. Bei den Leitungen 14 kann es sich beispielsweise um elektrische Leitungen, hydraulische oder pneumatische Leitungen oder mechanische Zugleitungen handeln, welche Komponenten miteinander verbinden, die in oder an dem Rahmengestell montiert sind. Die zum Hindurchstecken der Einstecklaschen 3A in der Profilwand 10B des zweiten Rahmenprofils 2B vorgesehenen Ausbruchschlitze 4B und/oder die zentralen Ausbrüche 13, 13' in der Profilwand 10B des zweiten Rahmenprofils 2B sind bei einer möglichen Ausführungsform durch einen Laserstrahl oder durch einen Wasserstrahl in die Profilwand 10B des zweiten Rahmenprofils 2B hineingeschnitten. Dies erlaubt eine besonders präzise und günstige Herstellung mit entsprechenden Konturen, sodass die Rahmenprofile 2 mit hoher Genauigkeit miteinander verbunden werden können. Andere Herstellungs- und Bearbeitungsverfahren sind ebenfalls geeignet (beispielsweise Stanzen oder Fräsen). Bei einer möglichen Ausführungsform weist das zweite Rahmen-Hohlprofil 2B gegenüber dem in seiner Profilwand 10B für die Einstecklasche 3A des ersten Rahmenprofils 3A vorgesehenen Ausbruchschlitz 4B mindestens ein Montagefenster 15 zur Handhabung der Kippsteine 6 auf. Montagefenster können auch in der Nähe der Ausbruchschlitze 4B vorgesehen werden. Beispielsweise kann ein Nutzer durch das äußere Montagefenster 15 die Kippsteine 6 in die Einführöffnungen 5A-1, 5A-2 einsetzen und anschließend mithilfe der Verbindungsbauelemente 9, beispielsweise Verbindungsschrauben, befestigen. Das Vorsehen von Montagefenstern 15 erlaubt eine einfache Handhabung der Kippsteine 6 und somit eine schnellere Montage des Rahmengestells 16.

Bei einer weiteren möglichen Ausführungsform kann gegenüber dem ersten Ausbruchschlitz 4B ein weiterer Ausbruchschlitz vorgesehen werden. Dieser weitere Ausbruchschlitz 4B dient zum Hindurchstecken einer besonders lang ausgebildeten Einstecklasche 3A des ersten Rahmenprofils 2A durch beide in der Profilwand 10B des zweiten Rahmenprofils 2B gegenüberliegend angeordneten Ausbruchschlitze 4B. Hierdurch kann eine besonders stabile mechanische Verbindung zwischen den beiden Rahmenprofilen 2A, 2B hergestellt werden. Bei dieser Ausführungsvariante liegt der Kipppunkt K des Kippsteins 6 an der äußeren Profilwand 8B der Profilwand 10B des Rahmenprofils 2B an.

Bei einer möglichen Ausführungsform sind die Gewinde 11 für die Verbindungsbauelemente 9 selbstsichernd ausgebildet. Weiterhin kann das Gewinde 11 selbstklemmend ausgebildet sein, sodass es robust gegenüber Vibrationen ist. Die beiden Rahmenprofile 2A, 2B bestehen bei einer möglichen Ausführungsform aus Stahl oder Aluminium. Bei einer alternativen Ausführungsform kann ein oder beide Rahmenprofile 2A, 2B auch aus Kunststoff bestehen. Hierdurch kann das Eigengewicht des durch die Rahmenprofile aufgebauten Rahmengestells verringert werden. Die Montagefenster 15 können auch zum Einführen und zur Verlegung der innerhalb des Rahmengestells 16 vorgesehenen Leitungen oder Zugseile 14 benutzt werden. Neben den Montagefenstern 15 können die verschiedenen Rahmenprofile 2A, 2B weitere Öffnungen zum Einführen bzw. Herausführen von Leitungen 14, insbesondere elektrischen, pneumatischen oder hydraulischen Leitungen, oder Zugseilen 14 aufweisen. Da die Leitungen bzw. Zugseile 14 innerhalb der hohlförmigen Rahmenprofile 2A, 2B verlegt sind, sind sie gegen Umwelteinflüsse geschützt und können durch mechanische Einwirkungen nicht beschädigt werden. Weiterhin kann durch das Verlegen der elektrischen Leitungen 14 innerhalb des hohlen Rahmengestells 16 eine höhere elektromagnetische Verträglichkeit erreicht werden, insbesondere wenn die Rahmenprofile 2 aus Metall hergestellt sind.

Die erfindungsgemäße Verbindungsvorrichtung 1 bietet vorzugsweise eine lösbare mechanische Verbindung mehrerer Rahmenprofile 2. Zum Herstellen einer mechanischen Verbindung werden die stirnseitig vorstehenden Einstecklaschen 3A des ersten Rahmenprofils 2A durch die entsprechenden Ausbruchschlitze 4B innerhalb der Profilwandung 10B des zweiten Rahmenprofils 2B zunächst hindurchgesteckt. Anschließend wird ein Kippstein 6 in die Einführöffnung 5A der hindurchgesteckten Lasche 3A eingesetzt. Schließlich wird das Verbindungsbauelement 9, insbesondere eine Schraube, in das Innengewinde 11 der Öffnung 12 des Kippsteins 6 hineingeschraubt, sodass der zweite Hebelabschnitt H2 an die Profilwandung 10B des zweiten Rahmenprofils 2B herangezogen wird und gleichzeitig die Stirnseite des ersten Rahmenprofils 2A gegen die Außenfläche 8B der Profilwandung 10B mit der mechanischen Anpresskraft F_{A} angepresst wird. Zum Lösen der mechanischen Verbindungsvorrichtung 1 wird das Verbindungsbauelement 9, insbesondere die Verbindungsschraube, aus dem Gewinde 11 des Kippsteins 6 herausgeschraubt und der Kippstein 6 anschließend aus der Einführöffnung 5A der Einstecklasche 3A herausgenommen bzw. herausgezogen. Sobald die Kippsteine 6 entfernt worden ist, kann das Rahmenprofil 2A aus den Ausbruchschlitzen 4B des zweiten Rahmenprofils 2B einfach mechanisch herausgezogen werden.

Mithilfe der erfindungsgemäßen Verbindungsvorrichtung 1 können Rahmenprofile 2, insbesondere Rahmen-Hohlprofile, in einfacher Weise mechanisch miteinander verbunden werden und anschließend auch in einfacher Weise wieder voneinander getrennt werden.

Die erfindungsgemäße Verbindungsvorrichtung 1 erlaubt es, Rahmenprofile 2 als Baukasten an einen Kunden zu versenden, der die Montage mithilfe der Kippsteine 6 vor Ort vornimmt. Ein Verschweißen bzw. eine unlösbare Verbindung von Rahmenprofilen, welche auch den Transport des hergestellten Rahmengestells erheblich erschwert, kann mithilfe der erfindungsgemäßen Verbindungsvorrichtung 1 vermieden werden. Die erfindungsgemäße Verbindungsvorrichtung 1 zur mechanischen Verbindung von Rahmenprofilen 2 erlaubt es zudem, verschiedenartig geformte Rahmenprofile 2 miteinander zu verbinden. Beispielsweise können Rahmen-Hohlprofile mit rechteckigem Querschnitt mit Rahmen-Hohlprofilen mit rundem Querschnitt verbunden werden. Weiterhin ist es zudem möglich, Rahmen-Hohlprofile mit andersartigen Rahmenprofilen zu verbinden, beispielsweise Rahmen-Hohlprofile mit Rahmen-T-Profilen.

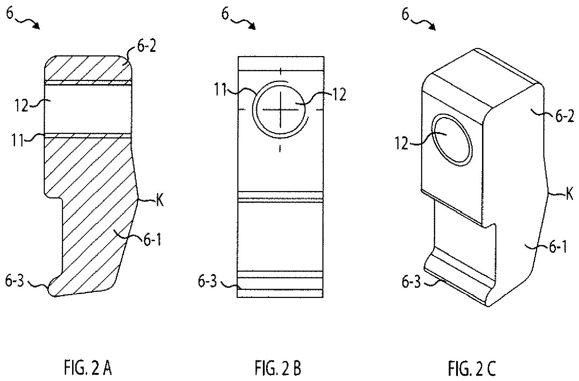

Die Figuren 2 bis 5 zeigen verschiedene Ausführungsbeispiele von Kippsteinen 6, die zur Herstellung von mechanischen Verbindungen zwischen Rahmenprofilen 2 verwendet werden können. Fig. 2A zeigt eine Schnittansicht durch eine erste Ausführungsvariante eines Kippsteins 6. Der Kippstein 6 besitzt einen ersten Hebelabschnitt 6-1 und einen zweiten Hebelabschnitt 6-2 mit zwei Hebelarmen H1, H2. Bei dem in den Figuren 2A bis 2C dargestellten Kippstein 6 weist der erste Hebelabschnitt 6-1 des Kippsteins 6 eine sich verjüngende Außenkontur auf, die es erlaubt, den Kippstein 6 in einfacher Weise in eine entsprechende Einführöffnung 5A einer Einstecklasche 3A einzuführen. Der erste Hebelabschnitt 6-1 des Kippsteins 6 besitzt zudem eine Nase 6-3 zum Hintergreifen der Einstecklasche 3A des ersten Rahmenprofils 2A. Fig. 2B zeigt eine Ansicht von oben auf den Kippstein 6 mit einer Einführöffnung 12 zum Hineinschrauben eines Verbindungsbauelementes 9 in ein Innengewinde 11.

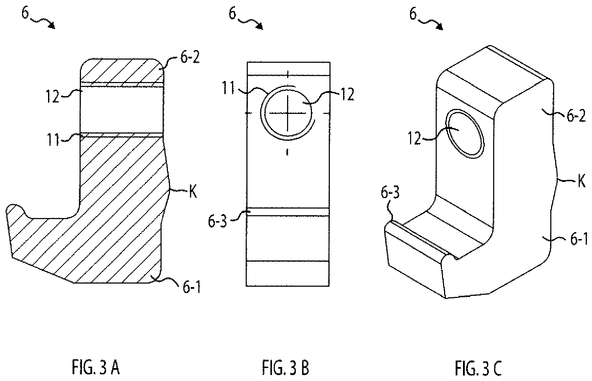

Die Figuren 3A, 3B, 3C zeigen eine weitere Ausführungsvariante eines Kippsteins 6. Bei der in Fig. 3A, 3B, 3C dargestellten Ausführungsvariante ist der Hebelabschnitt 6-1 des Kippsteins 6 nicht verjüngend und etwas massiver ausgebildet.

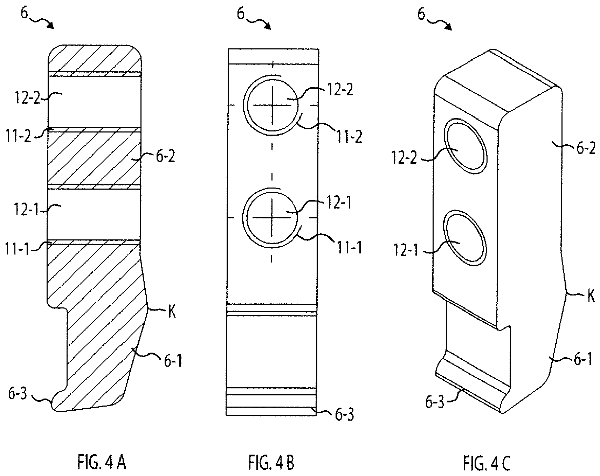

Die Figuren 4A, 4B, 4C zeigen eine weitere Ausführungsvariante eines verwendbaren Kippsteins 6. Bei dieser Ausführungsvariante besitzt der Kippstein 6 zwei übereinander angeordnete Öffnungen 12-1, 12-2 zur Aufnahme zweier entsprechender Verbindungsbauelemente bzw. Schrauben. Der zweite Hebelabschnitt 6-2 des Kippsteins 6 kann mithilfe der zwei Verbindungsschrauben mit einer erhöhten Zugkraft Fz gegen die Innenwand 7B der Profilwandung 10B des zweiten Rahmenprofils 2B gezogen werden, sodass die Anpresskraft F_{A}, mit welcher die Stirnseite des ersten Rahmenprofils 2A gegen die Außenwand 8B der Profilwandung 10B des zweiten Rahmenprofils 2B gepresst wird, erhöht wird. Weiterhin kann durch das Vorsehen von zwei Öffnungen 12-1, 12-2 an dem zweiten Hebelabschnitt 6-2 des Kippsteins 6 bei der Montage die Feinjustierung der Verbindungskräfte verbessert werden. Bei der in Fig. 4 dargestellten Ausführungsvariante des Kippsteins 6 ist der erste Hebelabschnitt 6-1 des Kippsteins 6 verjüngend ausgebildet, um ein Einsetzen des Kippsteins 6 in die Einführöffnung 5A der Einstecklasche 3A zu erleichtern.

Weitere Montagehilfsmittel sind möglich. Beispielsweise kann der Kippstein 6 eine Nut oder einen Steg aufweisen. Der Kippstein 6 wird in eine entsprechende Führung in der Profilwand 10B mittels eines Montagefensters eingesetzt und gleitet aufgrund seines Eigengewichts direkt in die Einführöffnung 5A der eingesteckten Einstecklasche 3A.

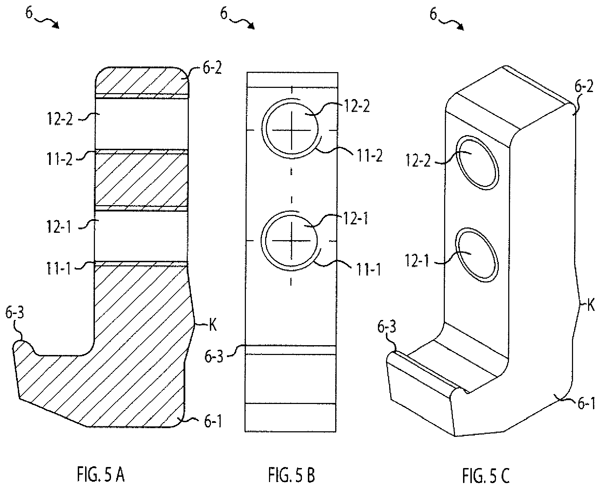

Bei der in den Figuren 5A, 5B, 5C dargestellten Ausführungsvariante besitzt der Kippstein 6 ebenfalls zwei Verbindungsöffnungen 12-1, 12-2 zum Einschrauben von zwei Verbindungsschrauben 9. Der erste Hebelabschnitt 6-1 des Kippsteins 6 ist bei der in den Figuren 5A bis 5C dargestellten Variante nicht verjüngend sondern massiv ausgebildet, um höhere Verbindungskräfte zu ermöglichen. Die Anzahl der Gewindeöffnungen 12 des zweiten Hebelabschnittes 6-2 des Kippsteins 6 kann je nach Anwendungsfall variieren. Bei einer möglichen Ausführungsform weist der Kippstein 6 mehr als zwei Gewindeöffnungen 12 auf.

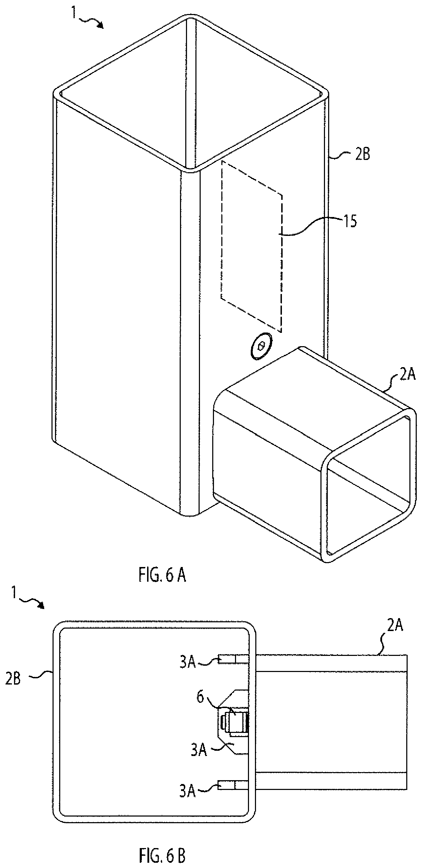

Die Figuren 6 bis 14 zeigen verschiedene Beispiele von mechanischen Verbindungen, die mithilfe der Verbindungsvorrichtung 1 gemäß der Erfindung zwischen verschiedenartigen Rahmenprofilen 2 hergestellt sind.

Fig. 6A, 6B zeigt eine mechanische Verbindung zwischen zwei rechteckförmigen Rahmen-Hohlprofilen 2A, 2B. Ein rechteckförmiges bzw. quadratisches ersten Rahmen-Hohlprofil 2A wird mit einem anderen Rahmen-Hohlprofil 2B mit ebenfalls rechteckförmigem Querschnitt verbunden. Die beiden Rahmen-Hohlprofile 2A, 2B werden im Wesentlichen mit einem Montagewinkel von 90° miteinander mechanisch mithilfe der erfindungsgemäßen Verbindungsvorrichtung 1 verbunden. Das erste Rahmenprofil 2A weist beispielsweise stirnseitig drei oder vier Einstecklaschen 3A zum Einstecken in eine entsprechende Anzahl von Ausbruchschlitzen 4B des zweiten Rahmenprofils 2B auf. Bei dem in Fig. 6A dargestellten Beispiel weist das zweite Rahmenprofil 2B eine Öffnung 15 auf, die zum Einführen und Herausführen von Kabeln 14 oder als Montagefenster dienen kann.

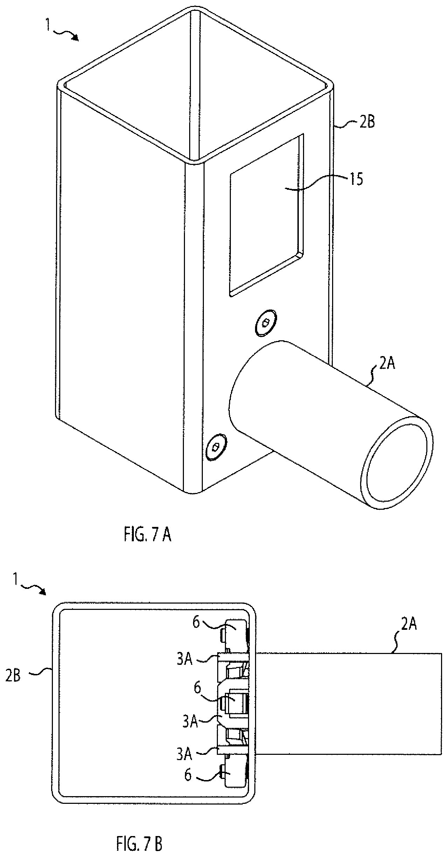

Die Fig. 7A, 7B zeigen ein weiteres Beispiel für eine mechanische Verbindung zwischen zwei Rahmenprofilen 2A, 2B, wobei es sich bei dem ersten Rahmenprofil 2A um ein Rahmen-Hohlprofil mit einem runden Querschnitt handelt. Das Rahmen-Hohlprofil 2A mit rundem Querschnitt besitzt an seiner Stirnseite eine oder mehrere Einstecklaschen 3A, die in entsprechende Ausbruchschlitze 4B des zweiten Rahmenprofils 2B hineingesteckt werden können. Die hervorstehenden Einstecklaschen 3A des ersten Rahmenprofils 2A können z.B. mithilfe eines Laserstrahls aus der zylinderförmigen Profilwand 10A des ersten Rahmenprofils 2A geschnitten sein.

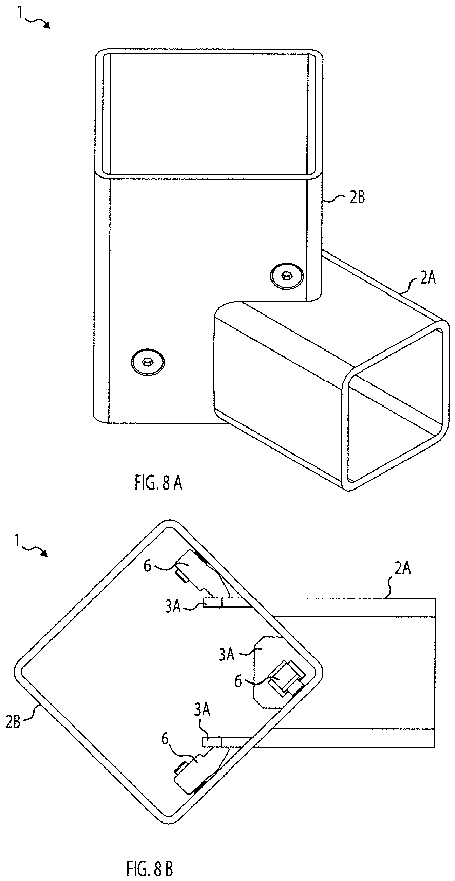

Die Figuren 8A, 8B zeigen ein weiteres Beispiel für eine mechanische Verbindung zwischen zwei Rahmenprofilen 2A, 2B. Beide Rahmenprofile 2A, 2B weisen einen rechteckförmigen Querschnitt auf. Bei der in den Figuren 8A, 8B dargestellten Verbindungsvariante ist die Stirnseite des ersten Rahmenprofils 2A eingekerbt geschnitten, sodass sie direkt auf eine Ecke des zweiten Rahmenprofils 2B passt bzw. dort anliegt. Die Stirnseite des ersten Rahmenprofils 2A ist in Bezug auf die Längsachse des ersten Rahmenprofils mit einem vorgegebenen Montagewinkel α geschnitten ausgebildet und liegt gegen die Profilwand des zweiten Rahmenprofils 2B mit diesem Montagewinkel α an. Die an der Stirnseite des ersten Rahmenprofils 2A vorgesehenen Einstecklaschen 3A werden durch entsprechende Ausbruchschlitze 4B in der Profilwand 10B des zweiten Rahmenprofils 2B hindurchgesteckt, wobei die Ausbruchschlitze 4B in dem entsprechenden Montagewinkel α in die Profilwandung 10B des zweiten Rahmenprofils 2B hineingeschnitten sind.

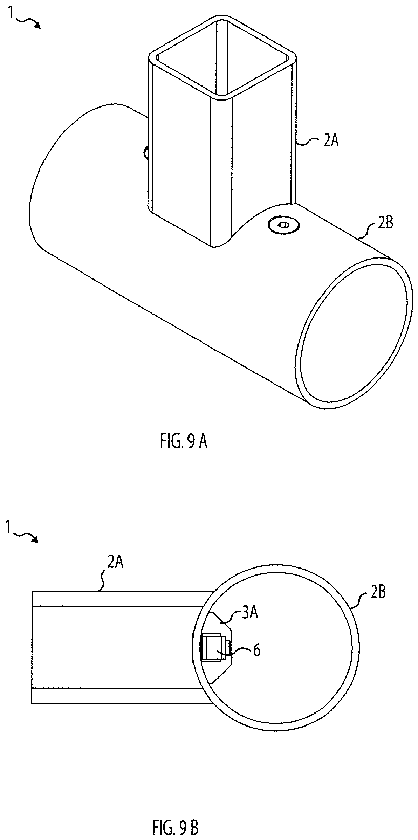

Die Figuren 9A, 9B zeigen ein weiteres Ausführungsbeispiel zur mechanischen Verbindung zwischen zwei Rahmenprofilen 2, die mithilfe der erfindungsgemäßen Verbindungsvorrichtung 1 miteinander mechanisch verbunden sind. Bei dem in den Figuren 9A, 9B dargestellten Beispiel ist ein erstes Rahmen-Hohlprofil 2A mit einem rechteckigen Querschnitt an ein zweites Rahmenprofil 2B mit kreisrundem Querschnitt montiert. Die Einstecklaschen 3A des ersten Rahmenprofils 2A werden in die zylinderförmige Profilwandung 10B des zweiten Rahmenprofils 2B gesteckt und werden anschließend mithilfe von Kippsteinen 6 festgezogen.

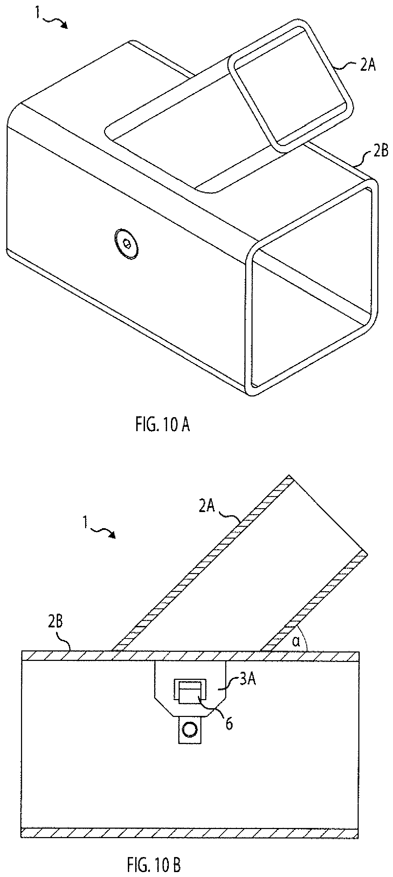

Die Figuren 10A, 10B zeigen ein weiteres Beispiel für eine mechanische Verbindung zwischen zwei Rahmenprofilen 2. Bei dem dargestellten Beispiel ist die Stirnseite des ersten Rahmenprofils 2A in Bezug auf die Längsachse des ersten Rahmenprofils mit einem Montagewinkel α geschnitten ausgebildet und liegt gegen die Profilwand 10B des zweiten Rahmenprofils 2B mit dem Montagewinkel α an. Die Einstecklasche 3A des ersten Rahmenprofils 2A ist mit einem entsprechenden Winkel aus der Stirnseite des ersten Rahmenprofils 2A herausgeschnitten und ist durch einen entsprechenden Ausbruchschlitz 4B des zweiten Rahmenprofils 2B hindurchgesteckt, wie in den Figuren 10A, 10B dargestellt. Bei dem in den Figuren 10A, 10B dargestellten Beispiel weisen beide Rahmenprofile 2A, 2B einen quadratischen Querschnitt auf. Rahmen-Hohlprofile 2 mit anderem Querschnitt können in gleicher Weise mit einem Montagewinkel α miteinander verbunden werden.

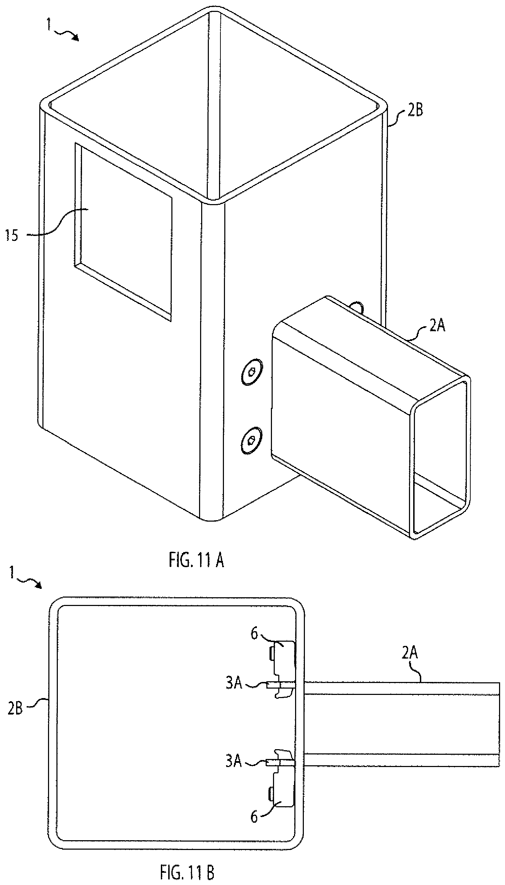

Die Figuren 11A, 11B zeigen ein weiteres Beispiel für eine mechanische Verbindung von Rahmenprofilen 2. Bei dem in den Figuren 11A, 11B dargestellten Beispiel wird ein Quer-Rahmen-Hohlprofil 2A mit einem rechteckigen Querschnitt an die Seitenwand eines zweiten vertikal ausgerichteten Rahmen-Hohlprofils 2B mit quadratischem Querschnitt montiert. Dies kann beispielsweise mithilfe von zwei bis vier Einstecklaschen 3A erfolgen.

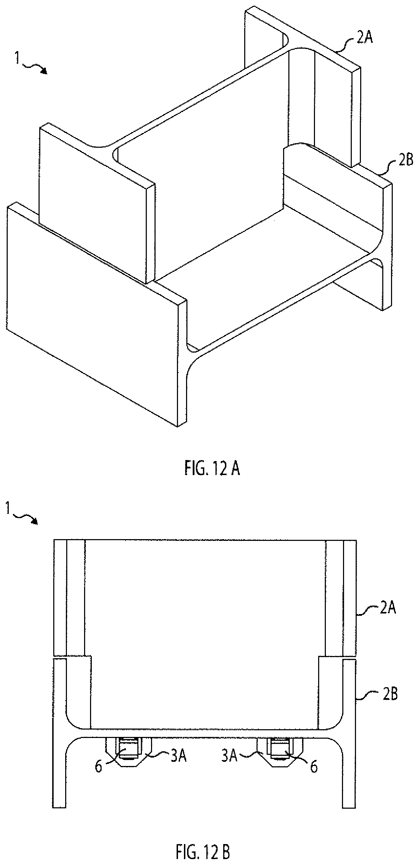

Die Figuren 12A, 12B zeigen ein weiteres Beispiel für eine mechanische Verbindung von Rahmenprofilen 2 mithilfe einer erfindungsgemäßen Verbindungsvorrichtung 1. Bei dem in den Figuren 12A, 12B dargestellten Beispiel werden zwei T-förmige Rahmenprofile 2A, 2B miteinander mechanisch verbunden. Die Einstecklaschen 3A des ersten Trägerrahmenprofils 2A werden in entsprechende Ausbruchschlitze 4B des zweiten Trägerrahmenprofils 2B hindurchgesteckt und mithilfe von Kippsteinen 6 festgezogen. Eine mechanische Verbindung zwischen einem Trägerrahmenprofil, insbesondere einem T-förmigen Trägerrahmenprofil, und einem Rahmen-Hohlprofil mithilfe von der erfindungsgemäßen Verbindungsvorrichtung 1 ist ebenfalls möglich.

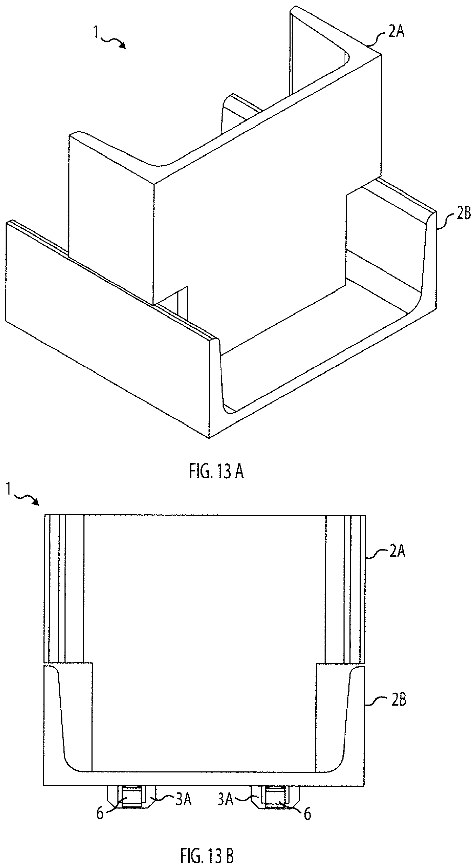

Die Figuren 13A, 13B zeigen die mechanische Verbindung zwischen zwei U-förmigen offenen Rahmenprofilen 2A, 2B mithilfe von Verbindungsvorrichtungen 1 gemäß der Erfindung. Die Einstecklaschen 3A des ersten U-förmigen Rahmenprofils 2A werden in die Ausbruchschlitze 4B des zweiten U-förmigen Rahmenprofils 2B hindurchgesteckt und mithilfe von Kippsteinen 6 fest mechanisch angezogen.

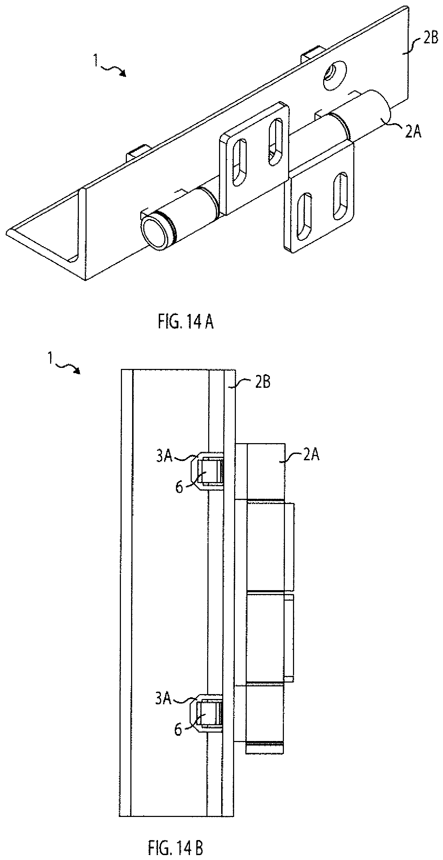

Die Figuren 14A, 14B zeigen eine weitere Ausführungsvariante der erfindungsgemäßen Verbindungsvorrichtung 1. Bei dieser Ausführungsform weist das erste Rahmenprofil 2A ein Scharnier auf, das mithilfe von Einstecklaschen 3A in entsprechende Ausbruchschlitze 4B des zweiten Rahmenprofils 2B hineingesteckt und dort mithilfe von Kippsteinen 6 montiert ist. Das in Fig. 14A, 14B dargestellte Scharnier 2A kann bei einer möglichen Ausführungsform eine Tür für ein sonstiges Normteil tragen bzw. lagern.

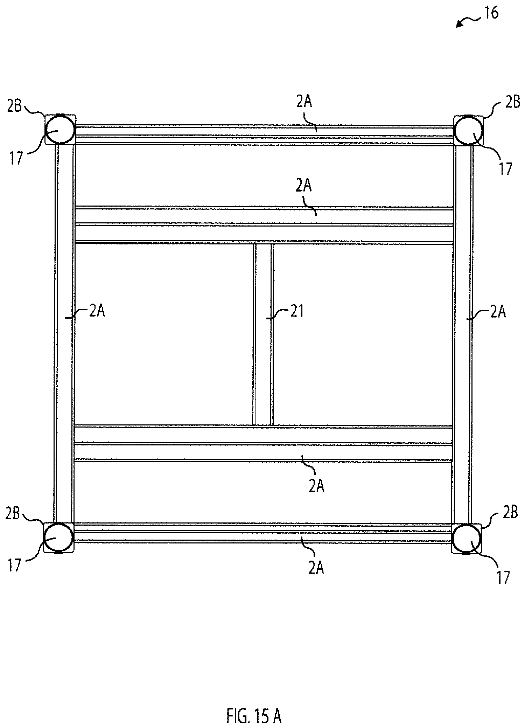

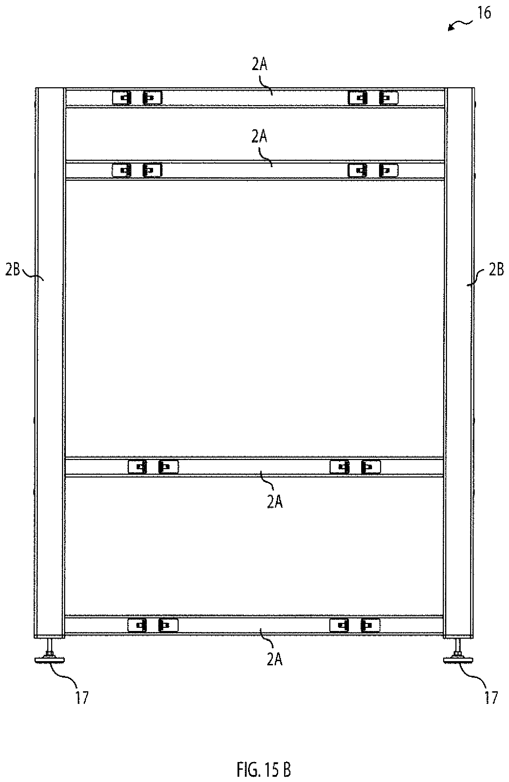

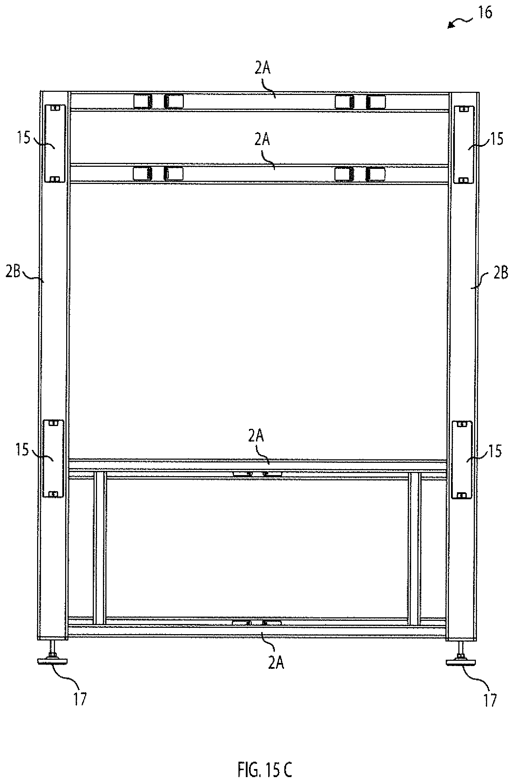

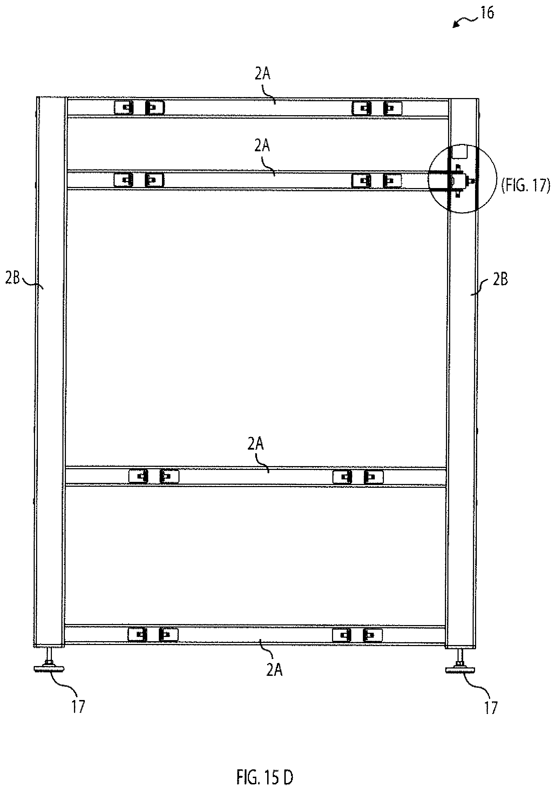

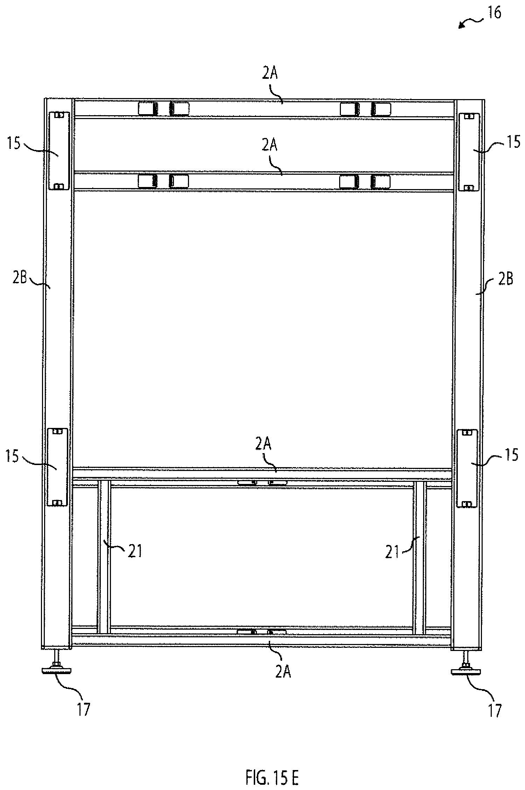

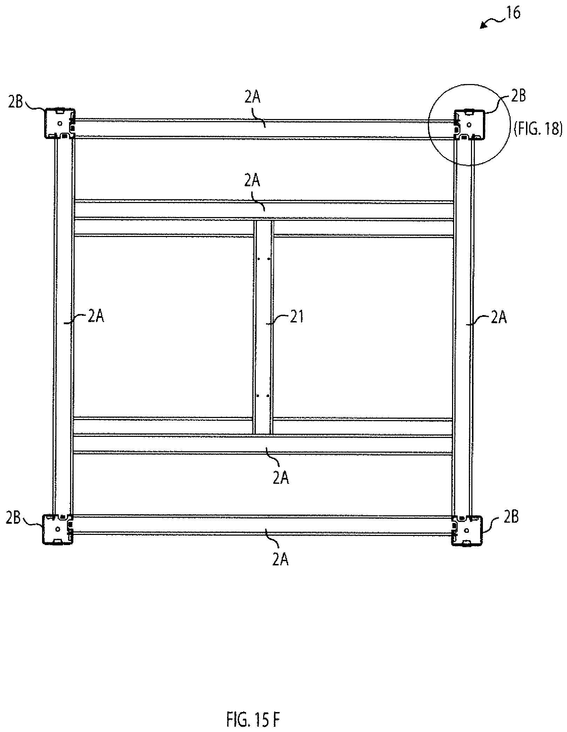

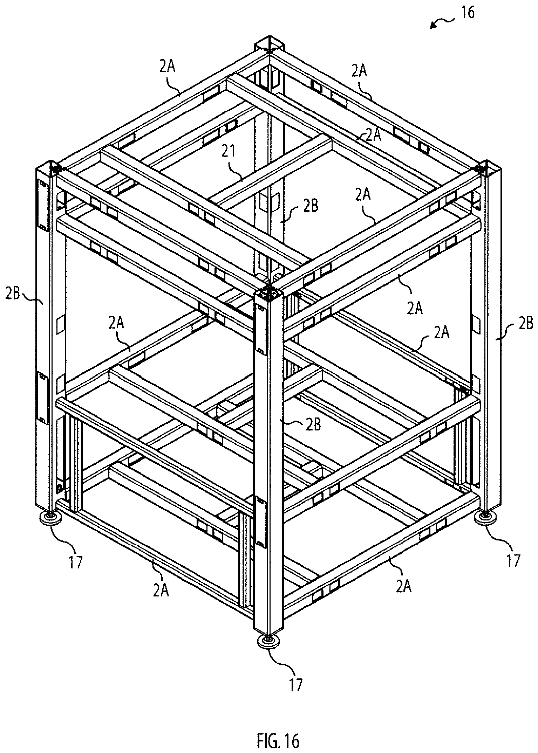

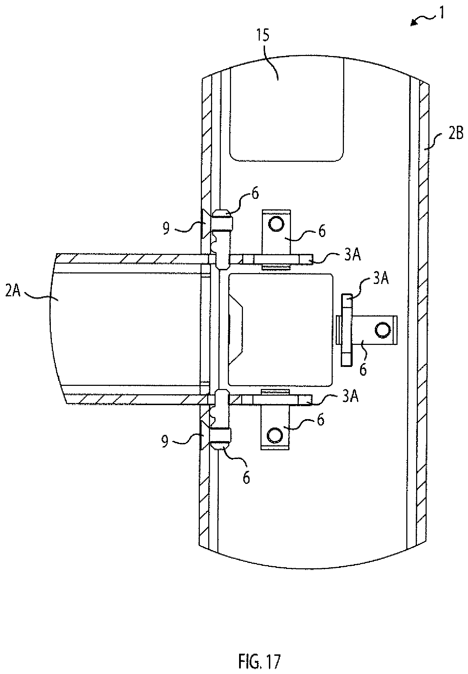

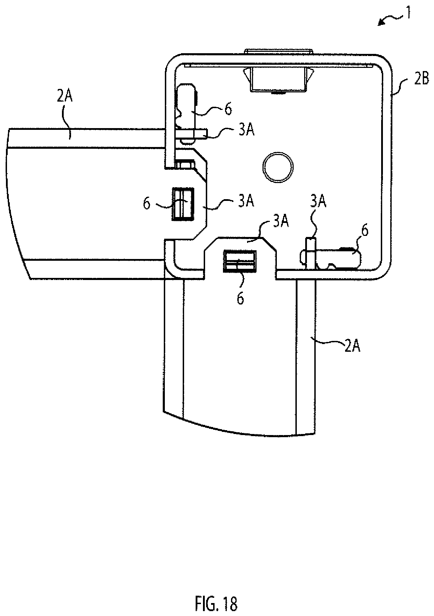

Die Figuren 15A bis 15F zeigen beispielhaft ein Rahmengestell 16 des Rahmenprofils 2, das mithilfe der erfindungsgemäßen Verbindungsvorrichtungen 1 mechanisch zusammengesetzt ist. Fig. 15A, 15F zeigen das Rahmengestell 16 von unten bzw. von oben. Fig. 15B - 15F zeigen vier Seitenansichten. Fig. 17 zeigt den Ausschnitt A in Fig. 15D. Die Fig. 18 zeigt den Ausschnitt B in Fig. 15F. Das in Fig. 15 dargestellte Rahmengestell 16 ist in Fig. 16 perspektivisch gezeigt. Das Rahmengestell 16 weist vier Seitenpfosten 2B auf, die senkrecht ausgerichtet sind und als Eckpfosten des Rahmengestells 16 horizontal ausgerichtete querverlaufende Rahmen-Hohlprofile 2A aufnehmen bzw. tragen. Fig. 15A zeigt das Rahmengestell 16 von unten mit Füßen 17. Die Füße 17 können mittels eines Gewindes eingeschraubt werden, um beim Aufstellen des Rahmengestells 16 das variierende Bodenniveau auszugleichen. Alternativ können auch Rollen vorgesehen werden. Zwischen den querverlaufenden Rahmenprofilen 2A können vertikal oder horizontal ausgerichtete weitere Rahmenprofile vorgesehen sein, die Streben 21 zwischen den Rahmenprofilen 2A bilden. Das in

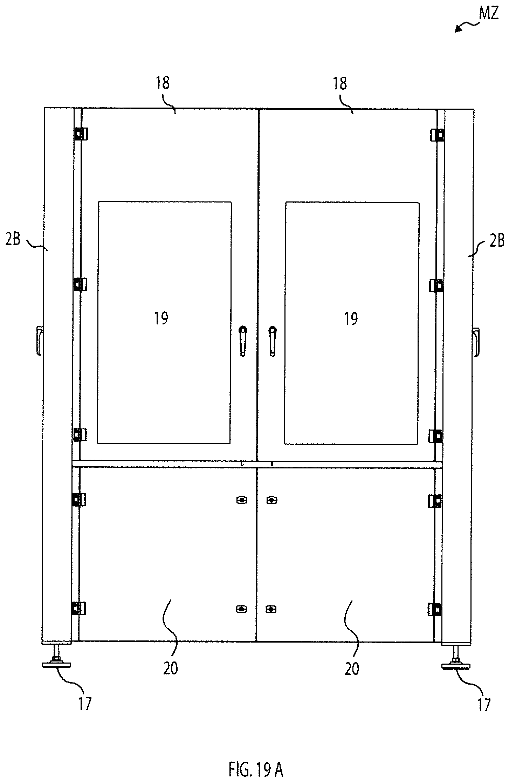

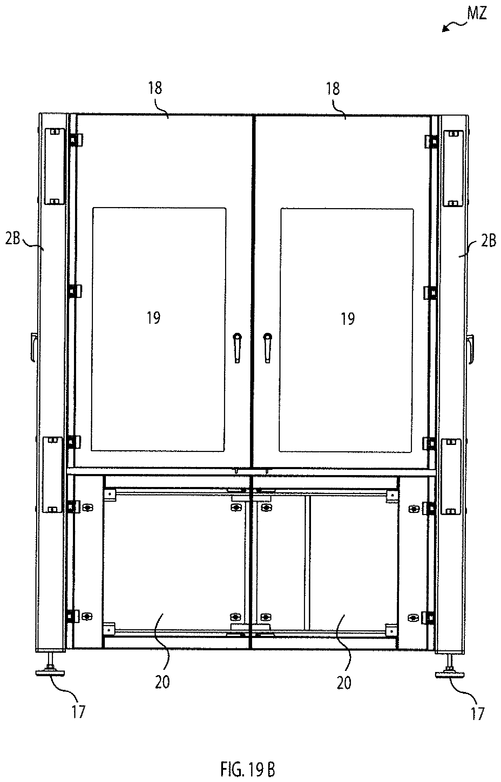

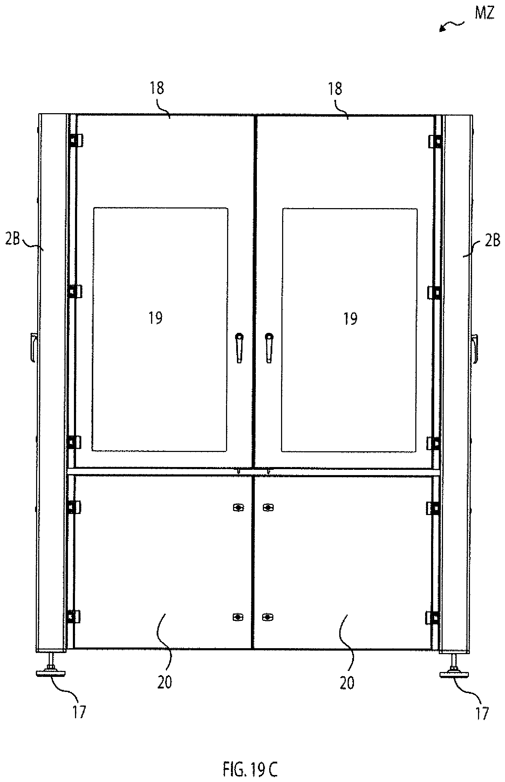

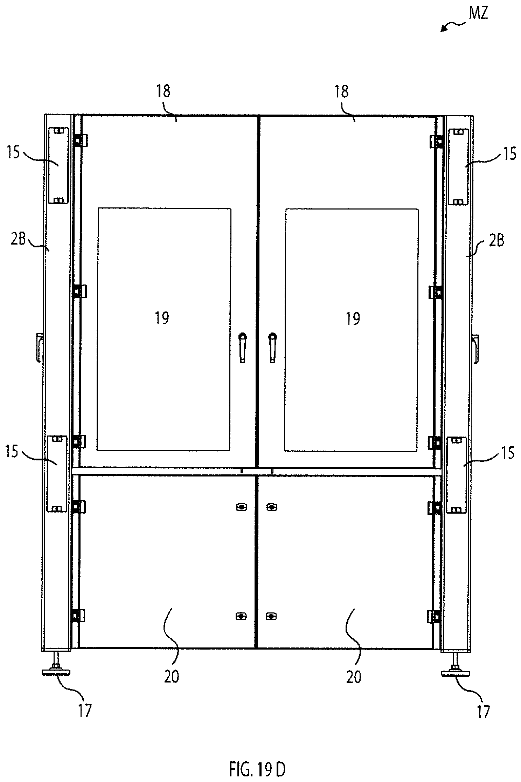

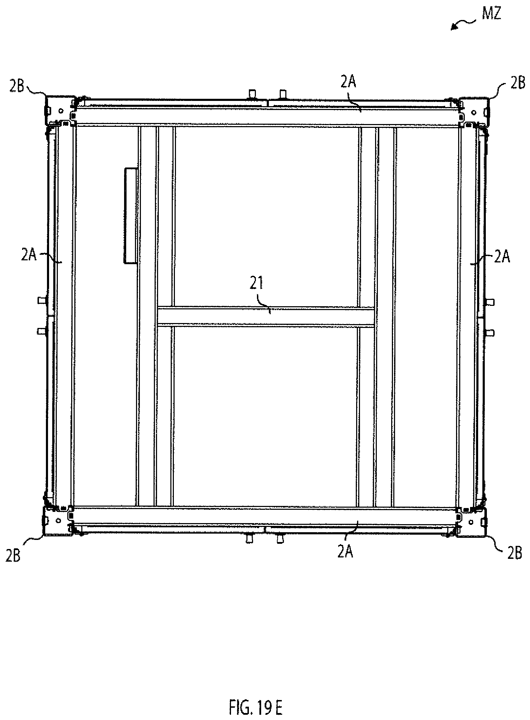

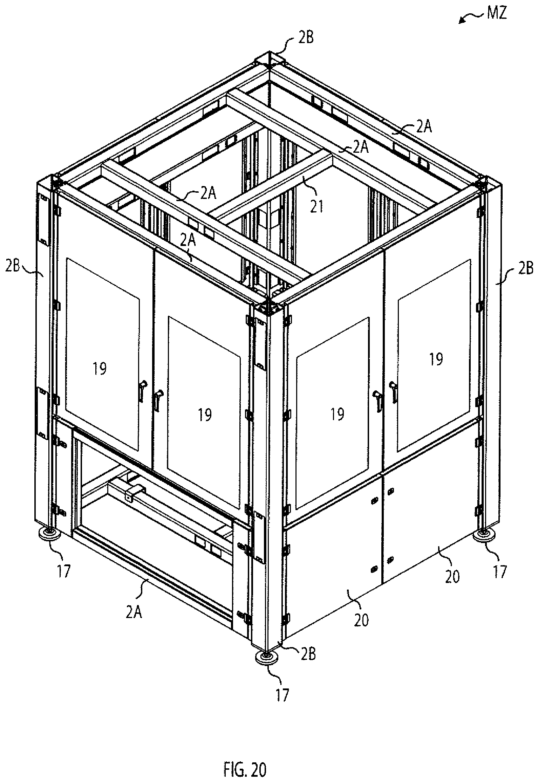

Fig. 16 perspektivisch dargestellte Rahmengestell 16 kann zum Aufbau einer Maschinenzelle MZ verwendet werden, wie sie in den Figuren 19A bis 19E und in Fig. 20 dargestellt ist. Die Maschinenzelle MZ kann Türelemente 18 und/oder Plattenelemente 20 aufweisen, die ihrerseits mithilfe von Einstecklaschen 3A in entsprechende Ausbruchschlitze 4B eines aufnehmenden Rahmenprofils 2B montiert sind. Selbst elektrische Geräte und Vorrichtungen können mithilfe von Einstecklaschen 3A in entsprechende Ausbruchschlitze 4B von aufnehmenden zweiten Rahmenprofilen 2B eingesetzt und montiert werden. Die erfindungsgemäße Verbindungsvorrichtung 1 erlaubt somit einen modularen Aufbau zwischen verschiedenartigen Rahmenprofilen 2, beispielsweise T-förmigen Rahmenprofilen und/oder hohlförmigen Rahmenprofilen, wobei optional zusätzliche funktionale Elemente, wie beispielsweise Klapptüren oder sonstige Funktionselemente, mithilfe von Einstecklaschen 3A und Kippsteinen 6 an entsprechenden Stellen in das aufgebaute Rahmengestell 16 in einfacher Weise fest montiert werden können. Die in den Figuren 19, 20 dargestellte Maschinenzelle MZ kann Bedienpersonen bei technischen Prozessen schützen, die in einer Kammer der Maschinenzelle MZ stattfinden. Umgekehrt werden die in der Kammer stattfindenden Prozesse vor Umwelteinflüssen geschützt. Innerhalb des in den Figuren 19, 20 dargestellten Rahmengestells 16 können hydraulische, pneumatische oder elektrische Leitungen oder Zug-/Druckleitungen 14 in einfacher Weise verlegt werden und funktionale Einheiten der Maschinenzelle MZ beispielsweise mit Strom versorgen. Im Weiteren können die innerhalb des Hohlrahmengestells 16 verlegten Leitungen 14 Kommunikationsverbindungen zwischen funktionalen Einheiten bereitstellen. An dem Rahmengestell 16 können Türelemente 18 mittels Scharnierelementen befestigt sein, die mithilfe von Einstecklaschen 3A in entsprechende Ausbruchschlitze 4B hineingesteckt und dort montiert sind. Die schwenkbar gelagerten Türen 18 können Sichtfenster 19 aufweisen, wie in Fig. 20 dargestellt. Das aufgebaute Rahmengestell 16 kann mittels verschraubbarer Fußelemente 17 auf einer Montagefläche aufgestellt werden. Horizontal angeordnete Plattenelemente können verschiedene Kammern innerhalb der Maschinenzelle MZ voneinander trennen. Beispielsweise ist eine unten angeordnete Kammer innerhalb der Maschinenzelle MZ mit Versorgungselementen bestückt, die Funktionselemente, beispielsweise Aktuatoren, in einer darüber befindlichen Kammer der Maschinenzelle MZ mit Strom oder sonstigen Ressourcen versorgen. Die Plattenelemente können Einstecklaschen und/oder Ausbruchschlitze aufweisen. Die in den Figuren 19, 20 dargestellte Maschinenzelle MZ stellt ein Anwendungsbeispiel dar, welches ein Rahmengestell 16 besitzt, das mithilfe der erfindungsgemäßen Verbindungsvorrichtung 1 und der erfindungsgemäßen Rahmenprofile 2 und/oder sonstiger Bauelemente, welche Einstecklaschen 3A und/oder Ausbruchschlitze 4B aufweisen, aufgebaut werden kann. Weitere Anwendungsfälle für Rahmengestelle 16, die mithilfe einer erfindungsgemäßen Verbindungsvorrichtung 1 aufgebaut werden können, sind Unterstände, beispielsweise Bushäuschen, oder Fahrradunterstände. Weiterhin eignet sich das erfindungsgemäß aufgebaute Rahmengestell 16 zum Aufbau von Containern, Unterstellplätzen, insbesondere Garagen oder Mülltonnenhäusern oder zum Aufbau von Photovoltaikanlagen. Mithilfe der erfindungsgemäßen Verbindungsvorrichtung 1 und der erfindungsgemäßen Rahmenprofile 2 ist es möglich, modular ein an den jeweiligen Anwendungsfall angepasstes Rahmengestell 16 teilweise lösbar und teilweise unlösbar aufzubauen. Bei einer möglichen Ausführungsform kann das modular aufgebaute Rahmengestell 16 nach erfolgtem Aufbau zusätzlich mit weiteren mechanischen Verbindungen versehen werden. Beispielsweise kann bei einer möglichen Anwendung mithilfe der erfindungsgemäßen Verbindungsvorrichtungen 1 zunächst ein Rahmengestell 16 aufgebaut werden und geprüft werden, ob es alle Anforderungen erfüllt. In einem weiteren Schritt können dann zusätzlich Schweißverbindungen durchgeführt werden, um dem Rahmengestell 16 eine zusätzliche mechanische Stärke zu verleihen. Vorzugsweise können einem Nutzer die verschiedenen Elemente des modularen Systems geliefert werden, der vor Ort einen Aufbau des Rahmengestells 16 mithilfe von Rahmenprofilen 2A, 2B und Verbindungsbauelementen 9 sowie Kippsteinen 6 vornimmt. Möchte der Nutzer das Rahmengestell 16 erweitern, kann er weitere Rahmenprofile 2 mithilfe von Verbindungsvorrichtungen 1 anbringen, um das Rahmengestell 16 entsprechend zu ergänzen bzw. zu vergrößern. Die Montage des Rahmengestells 16 mithilfe der erfindungsgemäßen Verbindungsvorrichtung 1 kann in einfacher Weise effizient und durch angelernte Mitarbeiter durchgeführt werden. Das Rahmengestell 16 hat eine hohe Biege- und/oder Torsionssteifigkeit zur Aufnahme von Betriebskräften. Die Rahmenprofile 2 können sowohl Einstecklaschen 3A als auch Ausbruchschlitze 4B aufweisen, d.h. jedes Rahmenprofil 2 kann einerseits als ein Rahmenprofil 2A und andererseits als Rahmenprofil 2B dienen.

Adaptervorrichtungen mit Einstecklaschen 3A können zur Montage von beliebig geformten Geräten vorgesehen werden. Bei einer Ausführungsvariante können metallisch ausgebildete Einstecklaschen 3A auch als elektrische Anschlusskontakte dienen. Elektrische Leitungen 14 können an die Anschlusskontakte angeschlossen werden. Beispielsweise können Anschlussstifte der Kabel 14 in die Einführöffnung 5A der Einstecklasche 3A eingesteckt werden, um einen elektrischen Kontakt herzustellen, sofern die Einführöffnung 5A nicht durch einen eingesetzten Kippstein 6 belegt ist. Auf diese Weise kann beispielsweise eine elektrische Erdung des Rahmengestells 16 erfolgen. Die Rahmenprofile 2 können zumindest teilweise aus einem elektrisch isolierenden und feuerresistenten Kunststoff hergestellt werden. Der Kunststoff ist bei einer möglichen Ausführungsform transparent, um die innerhalb des Rahmengestells 16 verlegten Leitungen 14 sichtbar zu machen. Alternativ können Montage- und oder Sichtfenster 15 vorgesehen werden, die mit nicht transparenten oder transparenten Deckelelementen verschließbar sind. Das Rahmengestell 16 kann funktionale Bauelemente, beispielsweise Solarzellen, tragen, die über Leitungen 14 miteinander verbunden sind. Die funktionalen Bauelemente oder Geräte können über Adapterelemente mit Einstecklaschen 3A in einfacher Weise an das Rahmengestell 16 montiert werden.

Bei einer möglichen Ausführungsform kann ein Rahmengestell 16 mithilfe einer Konfigurationssoftware, die auf einem Server einer Cloud-Plattform ausgeführt wird, von einem Client aus durch einen Nutzer basierend auf Basisbauelementen, insbesondere Rahmenprofilen und Platten, sowie weiteren Eingabeparametern, beispielsweise Montagewinkeln α, individuell konfiguriert werden.

## Patentansprüche

1. Verbindungsvorrichtung (1) zur mechanischen Verbindung von Rahmenprofilen (2) , wobei ein erstes Rahmenprofil (2A) mindestens eine vorstehende Einstecklasche (3A) aufweist, die durch einen in einer Profilwand (10B) eines weiteren Rahmenprofils (2B) vorgesehenen entsprechend geformten Ausbruchschlitz (4B) hindurchsteckbar ist, wobei die vorstehende Einstecklasche (3A) des ersten Rahmenprofils (2A) eine Einführöffnung (5A) zum Einführen eines ersten Hebelabschnittes (6-1) eines Kippsteines (6) besitzt, der einen zweiten Hebelabschnitt (6-2) mit einer nach außen gewölbten Kontur aufweist, die an einem Kipppunkt (K) an der Profilwand (10B) des zweiten Rahmenprofils (2B) anliegt,
wobei der zweite Hebelabschnitt (6-2) des Kippsteins (6) mittels mindestens eines Verbindungsbauelementes (9) um den Kipppunkt (K) herum hin zu der Profilwand (10B) des zweiten Rahmenprofils (2B) ziehbar ist, wobei der in die Einführöffnung (5A) der vorstehenden Einstecklasche (3A) eingeführte erste Hebelabschnitt (6-1) des Kippsteines (6) auf die durch den Ausbruchschlitz (4B) des zweiten Rahmenprofils (2B) hindurchgesteckte Einstecklasche des (3A) ersten Rahmenprofils (2A) eine Zugkraft (Fz) ausübt, sodass das erste Rahmenprofil (2A) mit einer entsprechenden Anpresskraft (Fa) gegen die Profilwand (10B) des zweiten Rahmenprofils (2B) gepresst wird.

2. Verbindungsvorrichtung nach Anspruch 1,
wobei der erste Hebelabschnitt (6-1) des Kippsteins (6) eine sich verjüngende Außenkontur zum Einführen in die Einführöffnung (5A) der vorstehenden Einstecklasche (3A) aufweist.

3. Verbindungsvorrichtung nach Anspruch 1 oder 2,
wobei der zweite Hebelabschnitt (6-2) des Kippsteins (6) mindestens eine Öffnung (12) mit Gewinde (11) zum Hineinschrauben eines Verbindungsbauelementes (9), insbesondere einer Schraube, und/oder eine Öffnung (12) zum Anbringen einer Nietverbindung aufweist.

4. Verbindungsvorrichtung nach einem der Ansprüche 1 bis 3, wobei die Rahmenprofile (2) Rahmen-Hohlprofile umfassen, die einen runden, rechteckigen, quadratischen, ovalen oder dreieckigen Querschnitt, und/oder offene Rahmenprofile aufweisen.

5. Verbindungsvorrichtung nach einem der vorangehenden Ansprüche 1 bis 4, wobei die Rahmenprofile (2) aus Metall und/oder aus Kunststoff und/oder aus Holz und/oder Stein und/oder aus Beton und/oder Verbundwerkstoffe bestehen.

6. Verbindungsvorrichtung nach einem der vorangehenden Ansprüche 1 bis 5,
wobei eine Stirnseite des ersten Rahmenprofils (2A) in Bezug auf eine Längsachse des ersten Rahmenprofils (2A) mit einem vorgegebenen Montagewinkel, α, geschnitten ausgebildet ist und gegen die Profilwand (10B) des zweiten Rahmenprofils (2B) mit dem Montagewinkel, α, anliegt.

7. Verbindungsvorrichtung nach Anspruch 6,
wobei der Montagewinkel, α, zwischen 0° und 180° liegt.

8. Verbindungsvorrichtung nach einem der vorangehenden Ansprüche 1 bis 7,
wobei das zweite Rahmen-Hohlprofil (2B) mindestens ein Montagefenster (15) zur Handhabung des Kippsteins (6) aufweist.

9. Verbindungsvorrichtung nach einem der vorangehenden Ansprüche 4 bis 8,
wobei das zweite Rahmen-Hohlprofil (2B) diametral gegenüber dem in seiner Profilwand (10B) für die Einstecklasche (3A) des ersten Rahmenprofils (2A) vorgesehenen Ausbruchschlitz (4B) einen weiteren Ausbruchschlitz zum Hindurchstecken einer lang ausgebildeten Einstecklasche (3A) des ersten Rahmenprofils (2A) durch beide in der Profilwandung (10B) des zweiten Rahmen-Hohlprofils (2B) gegenüberliegende Ausbruchschlitze aufweist.

10. Verbindungsvorrichtung nach einem der vorangehenden Ansprüche 1 bis 9,
wobei die in der Profilwandung (10B) des zweiten Rahmenprofils (2B) für eine oder mehrere Einstecklaschen (3A) des ersten Rahmenprofils (2A) vorgesehenen Ausbruchschlitze (4B) um einen zentralen Ausbruch (13) in der Profilwand (10B) des zweiten Rahmenprofils herum angeordnet sind, dessen Kontur dem Querschnitt des eingesteckten ersten Rahmen-Hohlprofils (2A) entspricht.

11. Verbindungsvorrichtung nach einem der vorangehenden Ansprüche 8 bis 10,
wobei die zum Hindurchstecken der Einstecklasche (3A) in der Profilwand (10B) des zweiten Rahmenprofils (2B) vorgesehenen Ausbruchschlitze (4B) und/oder der zentrale Ausbruch (13) in der Profilwand (10B) des zweiten Rahmenprofils (2B) und/oder das Montagefenster in der Profilwand (10B) des zweiten Rahmenprofils (2B) durch einen Laserstrahl oder durch einen Wasserstrahl in die Profilwand (10B) des zweiten Rahmenprofils (2B) geschnitten oder durch Fräsen, Stanzen, Lochen, Ausklinken oder Drahterodieren hergestellt sind.

12. Verbindungsvorrichtung nach einem der vorangehenden Ansprüche 4 bis 11,
wobei die durch die Verbindungsvorrichtung (1) verbundenen Rahmen-Hohlprofile (2) jeweils einen Querschnitt aufweisen, welcher zur Verlegung von Leitungen (14), insbesondere von elektrischen Leitungen und/oder hydraulischen Leitungen, und/oder Pneumatikleitungen und/oder Bowdenzug innerhalb der Rahmen-Hohlprofile (2) geeignet ist.

13. Maschinenzelle (MZ) mit einem Rahmengestell (16), das Rahmenprofile (2) aufweist, die jeweils durch Verbindungsvorrichtungen (1) nach einem der vorangehenden Ansprüche 1 bis 12 mechanisch miteinander verbunden sind.

## Claims

1. Connecting device (1) for the mechanical connection of frame profiles (2), wherein a first frame profile (2A) comprises at least one protruding insertion tab (3A) that can be inserted through an accordingly formed breakout slot (4B) that is provided in a profile wall (10B) of a further frame profile (2B), wherein the protruding insertion tab (3A) of the first frame profile (2A) comprises an insertion opening (5A) for the insertion of a first lever section (6-1) of a tilting stone (6) that comprises a second lever section (6-2) having a contour which is curved outwards and lies against a tilting point (K) on the profile wall (10B) of the second frame profile (2B),
wherein the second lever section (6-2) of the tilting stone (6) can be pulled by means of at least one connecting element (9) around the tilting point (K) towards the profile wall (10B) of the second frame profile (2B), wherein the first lever section (6-1) of the tilting stone (6), said first lever section being inserted into the insertion opening (5A) of the protruding insertion tab (3A), exerts a pulling force (Fz) onto the insertion tab of the (3A) first frame profile (2A), said insertion tab being inserted through the breakout slot (4B) of the second frame profile (2B) with the result that the first frame profile (2A) is pressed with a corresponding contact pressure (Fa) against the profile wall (10B) of the second frame profile (2B).

2. Connecting device according to claim 1,
wherein the first lever section (6-1) of the tilting stone (6) has a tapering outer contour for the insertion into the insertion opening (5A) of the protruding insertion tab (3A) .

3. Connecting device according to claim 1 or 2, wherein the second lever section (6-2) of the tilting stone (6) comprises at least one opening (12) having a thread (11) for screwing in a connecting component (9), in particular a screw, and/or an opening (12) for attaching a rivet joint.

4. Connecting device according to one of claims 1 to 3, wherein the frame profiles (2) comprise frame hollow profiles that comprise a round, rectangular, square, oval or triangular cross section, and/or open frame profiles.

5. Connecting device according to one of the preceding claims 1 to 4, wherein the frame profiles (2) are embodied from metal and/or synthetic material and/or from wood and/or stone and/or concrete and/or composite materials.

6. Connecting device according to one of the preceding claims 1 to 5,
wherein an end face of the first frame profile (2A) in relation to a longitudinal axis of the first frame profile (2A) is embodied as cut at a predetermined mounting angle, α, and lies against the profile wall (10B) of the second frame profile (2B) at the mounting angle, α.

7. Connecting device according to claim 6,
wherein the mounting angle, α, is between 0° and 180°.

8. Connecting device according to one of the preceding claims 1 to 7,
wherein the second frame hollow profile (2B) comprises at least one mounting window (15) for handling the tilting stone (6).

9. Connecting device according to one of the preceding claims 4 to 8,
wherein diametrically opposite the breakout slot (4B) that is provided in the profile wall (10B) of the frame hollow profile (2B) for the insertion tab (3A) of the first frame profile (2A) the second frame hollow profile (2B) has a further breakout slot for the insertion of an elongated insertion tab (3A) of the first frame profile (2A) through the two breakout slots that lie opposite one another in the profile wall (10B) of the second frame hollow profile (2B).

10. Connecting device according to one of the preceding claims 1 to 9,
wherein the breakout slots (4B) which are provided in the profile wall (10B) of the second frame profile (2B) for one or multiple insertion tabs (3A) of the first frame profile (2A) are arranged around a central breakout (13) in the profile wall (10B) of the second frame profile, the contour of which corresponding to the cross section of the inserted first frame hollow profile (2A).

11. Connecting device according to one of the preceding claims 8 to 10,
wherein the breakout slots (4B) that are provided for the insertion of the insertion tab (3A) in the profile wall (10B) of the second frame profile (2B) and/or the central breakout (13) in the profile wall (10B) of the second frame profile (2B) and/or the mounting window in the profile wall (10B) of the second frame profile (2B) are cut into the profile wall (10B) of the second frame profile (2B) by means of a laser beam or by means of a water jet or are produced by means of milling, stamping, punching, notching or wire erosion.

12. Connecting device according to one of the preceding claims 4 to 11,
wherein the frame hollow profiles (2) that are connected by means of the connecting device (1) in each case comprise a cross section that is suitable for routing electrical lines and/or hydraulic lines, and/or pneumatic lines and/or Bowden cable within the frame hollow profiles (2).

13. Machine cell (MZ) having a frame (16) that comprises frame profiles (2) that are mechanically connected to one another in each case by means of connecting devices (1) according to one of the preceding claims 1 to 12.

## Revendications

1. Dispositif d'assemblage (1) pour l'assemblage mécanique de profilés de châssis (2), dans lequel un premier profilé de châssis (2A) comporte au moins une languette d'insertion en saillie (3A) qui peut être passée à travers une découpe (4B) formée de manière correspondante et prévue dans une paroi de profilé (10B) d'un autre profilé de châssis (2B), dans lequel la languette d'insertion en saillie (3A) du premier profilé de châssis (2A) possède une ouverture d'insertion (5A) pour insérer une première partie de levier (6-1) d'un bloc à bascule (6) comportant une seconde partie de levier (6-2) ayant un contour bombé vers l'extérieur, qui s'applique sur un point de basculement (K) sur la paroi de profilé (10B) du second profilé de châssis (2B),
dans lequel la seconde partie de levier (6-2) du bloc à bascule (6) peut être tirée au moyen d'au moins un élément d'assemblage (9) autour du point de basculement (K) jusqu'à la paroi de profilé (10B) du second profilé de châssis (2B), dans lequel la première partie de levier (6-1) du bloc à bascule (6) insérée dans l'ouverture d'insertion (5A) de la languette d'insertion en saillie (3A) exerce une force de traction (Fz) sur la languette d'insertion (3A) du premier profilé de châssis (2A) passé à travers la découpe (4B) du second profilé de châssis (2B), de telle sorte que le premier profilé de châssis (2A) est pressé avec une force de pression (Fa) correspondante contre la paroi de profilé (10B) du second profilé de châssis (2B).

2. Dispositif d'assemblage selon la revendication 1,
dans lequel la première partie de levier (6-1) du bloc à bascule (6) a un contour extérieur qui se rétrécit pour l'insertion dans l'ouverture d'insertion (5A) de la languette d'insertion en saillie (3A).

3. Dispositif d'assemblage selon la revendication 1 ou 2, dans lequel la seconde partie de levier (6-2) du bloc à bascule (6) comporte au moins un orifice (12) avec un filetage (11) pour visser à l'intérieur un élément d'assemblage (9), en particulier une vis, et/ou un orifice (12) pour réaliser un assemblage riveté.

4. Dispositif d'assemblage selon l'une des revendications 1 à 3,
dans lequel le profilé de châssis (2) comprend des profilés creux de châssis ayant une section transversale ronde, rectangulaire, carrée, ovale ou triangulaire et/ou des profilés de châssis ouverts.

5. Dispositif d'assemblage selon l'une des revendications 1 à 4,
dans lequel les profilés de châssis (2) sont en métal et/ou en matière plastique et/ou en bois et/ou en pierre et/ou en béton et/ou en matériaux composites.

6. Dispositif d'assemblage selon l'une des revendications 1 à 5 précédentes,
dans lequel une face frontale du premier profilé de châssis (2A) est réalisée découpée par rapport à un axe longitudinal du premier profilé de châssis (2A) avec un angle de montage, α, prédéfini et s'applique contre la paroi de profilé (10B) du second profilé de châssis (2B) avec l'angle de montage, α.

7. Dispositif d'assemblage selon la revendication 6,
dans lequel l'angle de montage, α, est compris entre 0° et 180°.

8. Dispositif d'assemblage selon l'une des revendications 1 à 7 précédentes,
dans lequel le second profilé creux de châssis (2B) comporte au moins une fenêtre de montage (15) pour manipuler le bloc à bascule (6) .

9. Dispositif d'assemblage selon l'une des revendications 4 à 8 précédentes,
dans lequel le second profilé creux de châssis (2B) comporte, de manière diamétralement opposée à la fente d'insertion (4B) prévue dans sa paroi de profilé (10B) pour la languette d'insertion (3A) du premier profilé de châssis (2A), une autre fente d'insertion pour passer à travers une languette d'insertion (3A) du premier profilé de châssis (2A) allongée, à travers les deux fentes d'insertion opposées dans la paroi de profilé (10B) du second profilé creux de châssis (2B).

10. Dispositif d'assemblage selon l'une des revendications 1 à 9 précédentes,
dans lequel les fentes d'insertion (4B) prévues dans la paroi de profilé (10B) du second profilé de châssis (2B) pour une ou plusieurs languettes d'insertion (3A) du premier profilé de châssis (2A) sont agencées autour d'une découpe centrale (13) dans la paroi de profilé (10B) du second profilé de châssis, dont le contour correspond à la section transversale du premier profilé creux de châssis (2A) inséré.

11. Dispositif d'assemblage selon l'une des revendications 8 à 10 précédentes,
dans lequel les fentes d'insertion (4B) destinées à être traversées par la languette d'insertion (3A) dans la paroi de profilé (10B) du second profilé de châssis (2B) et/ou la découpe centrale (13) dans la paroi de profilé (10B) du second profilé de châssis (2B) et/ou la fenêtre de montage dans la paroi de profilé (10B) du second profilé de châssis (2B) sont découpées par un faisceau laser ou par un jet d'eau dans la paroi de profilé (10B) du second profilé de châssis (2B) ou sont fabriquées par fraisage, poinçonnage, perçage, mortaisage ou étincelage par fil.

12. Dispositif d'assemblage selon l'une des revendications 4 à 11 précédentes,
dans lequel les profilés creux de châssis (2) assemblés par le dispositif d'assemblage (1) ont respectivement une section transversale qui est adaptée pour poser des conduites (14), en particulier des conduites électriques et/ou des conduites hydrauliques et/ou des conduites pneumatiques et/ou un câble Bowden à l'intérieur des profilés creux de châssis (2).

13. Cellule de machine (MZ) avec un bâti (16) comportant des profilés de châssis (2) qui sont respectivement assemblés mutuellement et mécaniquement par des dispositifs d'assemblage (1) selon l'une des revendications 1 à 12 précédentes.
